# EUROPEAN PATENT SPECIFICATION

(11) **EP 2 438 838 B1**
(45) Date of publication and mention of the grant of the patent: **18.05.2016**
(21) Application number: 11184508.7
(22) Date of filing: 10.10.2011
(51) Int. Cl.: A47J 39/02, A47B 31/02

(54) **Dual climate cart and tray for accommodating comestible items and a method of operating the same**
Doppelklimawagen und Schale zur Unterbringung essbarer Artikel und Betriebsverfahren dafür
Chariot et plateau à double climat pour recevoir des articles comestibles et procédé de fonctionnement associé

(30) Priority: 08.10.2010 US 900761
(43) Date of publication of application: 11.04.2012
(73) Proprietor: Cambro Manufacturing Company, Huntington Beach CA 92647-2056 (US)
(72) Inventor: Brattoli, Pietro, 72654 Neckartenzlingen (DE)
(74) Representative: Latscha Schöllhorn Partner AG

(56) References cited:
- WO-A1-99/63831
- DE-B3-102009 051 162
- FR-A1- 2 923 368

## Description

### Background of the Invention

### Field of the Invention

The invention relates to the field of food preparation and storage, specifically to a system that re-thermalizes comestible items and maintains the comestible items at both an increased temperature and a decreased temperature contemporaneously within the same unit.

### Description of the Prior Art

Currently, there is an abundance of devices that are used for maintaining food or comestible items at a variety of one or more temperatures. The majority of the devices take the form of a cabinet or locker with a plurality of shelves. Each shelf contains one or more heating pads or heating elements disposed on its top surface. A tray, plate, or other serving item is then placed or locked down onto the heating elements of the shelf. The heating elements most typically provide radiant or convection heat to the serving item, thereby heating it and any comestible items disposed on or in the serving item.

A few devices provide for heating the serving item at a plurality of temperatures. Most notably, these typically include a shelf within a trolley or cabinet with a number of different heating elements on the shelf. A tray, which includes a corresponding number of compartments or sectioned areas, is then placed on the shelf, one heating element being inserted beneath each corresponding tray compartment. Each heating element is then selectively controlled to provide a different temperature for each tray compartment. Alternatively, other devices uniformly heat a plurality of trays which include both hot and cold compartments, however the cold compartments within the tray have a layer of insulation or a thicker material base between it and the heating element, leaving it relatively colder than the thinner hot compartments. E.g., FR 2 923 368 A1 and DE 10 2009 051 162 B2 describe examples of trays and trolleys.

However, while the devices and trays of the prior art have had their advantages, they are not without their own specific drawbacks with regard to any of the above mentioned features. In particular, the heating of trays as is taught in the prior art is often a time consuming and laborious process. Additionally, a device that heats a plurality of trays also has great difficulty in simultaneously cooling those same trays to a substantially lower temperature.

Therefore, what is needed is a dual zone system and method for transferring heat to and from comestible items, which system and method are at the same time safe and efficient to use, particularly with regard to the initial heating of the warming device.

### Brief Summary of the Invention

The illustrated embodiments of the invention include a system - which is not part of the claims however - for the re-thermalization of comestible items within two separate climates or temperature zones which further include a mobile cabinet or cart, one or more shelves disposed within the cabinet, and one or more tray dividers connected to the shelves. Each tray divider splits each shelf into two halves or portions. Hereinafter, the divided portions of the tray may for convenience be referred to as "halves", but it is to be expressly understood that the fractional ratio to which the space above the tray is split by the tray divider is arbitrary. These two halves are then designated as a "hot" zone and a "cold" zone respectively. One or more sockets or contacts are disposed within each hot zone for each shelf and a controller board within the mobile cart and is electrically coupled to every socket or contact. Each of the shelves may accommodate a tray. The tray dividers connected to the shelves also split the tray into a "hot" half or portion which is disposed within the hot zone, and a "cold" half or portion which is disposed within the cold zone. The temperature within the cold zone is controlled and maintained by a conventional refrigerator. The space above the tray may be divided by the tray dividers by any ratio as may be desired.

Each of tray dividers that splits the trays into two halves also include a thermal shield connected to its bottom surface. The thermal shield further divides the tray into a "hot" half and a "cold" half by preventing any thermal interaction between the hot zone and the cold zone.

Each of the sockets comprise one or more loop plugs and power plugs, each of the loop plugs and power plugs including means for electrically coupling to a corresponding number of loop pins and power pins located on the trays. The power plugs also include means for establishing an electrical connection with the corresponding power pins of the tray before the loop plugs are electrically connected to the loop pins of the tray.

Each of the plurality of trays include at least two heating filaments within the hot zone of the tray which are thermally coupled to a flat surface of the tray. One of the filaments includes means for heating its corresponding portion of the hot zone to a higher temperature than that of the other filament to provide two separate portions at different temperatures in the hot zone on the tray.

In one embodiment, the mobile cabinet includes one or more tray status lights, wherein each tray status light is located on the mobile cabinet on the tray divider which is adjacent to a corresponding shelf. Each of the tray status lights is regulated by the controller board and each tray status light also includes means for indicating whether or not the tray has been heated by the mobile cabinet.

The illustrated embodiments also includes a tray , which is defined in claim 1, to be used in a dual climate system for maintaining comestible items at both an elevated and a reduced temperature. The tray includes a reheatable flat surface that is substantially rectangular, a lip disposed about the rectangular flat surface, a recess defined within the lip, one or more power pins or contacts and a plurality of loop pins located within the recess, one or more heating filaments connected to the power pins and thermally coupled to the flat surface, and a gap defined within the lip across the width of the flat surface. Preferably, a pair of heating filaments are connected to the power pins or contacts and thermally coupled to the flat surface, wherein one of the two filaments includes means for heating its corresponding portion of the hot zone to a higher temperature than that of the other filament to provide two separate portions of the hot zone on the tray at two different temperatures.

In one embodiment, the heating filaments are disposed within only one half of the tray, each filament being formed into a substantially symmetrical pattern. A thermistor is coupled to one or more of the filaments.

The illustrated embodiments also provide for an apparatus , as defined in claim 8, for maintaining comestible items disposed on a plurality of trays at both an elevated and a reduced temperature. The apparatus includes a pair of side walls connected to a base, a back portion connected between the pair of side walls, a top portion connected across the top of the side walls and back portion and one or more shelves disposed between the side walls. A corresponding number of tray dividers are connected to the shelves to split each shelf into two equally sized halves, wherein one half is designated as a "hot" zone and the other half is designated as a "cold" zone. One or more sockets are coupled to the back portion within the hot zone, at least one socket being coupled to the back portion for each of the number of shelves with a controller board also connected to the number of sockets. The controller board includes means for regulating the amount of electric current that is delivered by each of the sockets.

In one particular embodiment, each of the tray dividers include a thermal shield disposed within each shelf so as to prevent thermal interaction between the hot zone and the cold zone.

The temperature within the cold zone is controlled and regulated by means of a conventional refrigerator.

In another embodiment, each of the number of sockets include means for mechanically and electrically connecting to the corresponding plurality of trays. The controller board and number of sockets include means for supplying an electric current to the plurality of trays only after the insertion of the corresponding socket into each of the trays has been detected by means of the socket.

Finally, the illustrated embodiments also provide for a method ,as defined in claim 12, for heating a tray used for maintaining comestible items at both an elevated and a reduced temperature. The method includes the steps of inserting a tray into a mobile cart, connecting the tray to a socket or contact disposed within the mobile cart, detecting the presence of the tray at a specific location within the mobile cart, supplying a flow of electric current to the tray through the socket or contact, heating the tray, discontinuing the flow of electric current to the tray through the socket or contact, and then removing the tray from the mobile cart.

In one embodiment, the method step of inserting the tray into the mobile cart includes the steps of sliding the tray across a shelf disposed within the mobile cart, inserting a tray divider and a thermal shield disposed within the mobile cart into a gap defined within the tray, and splitting the tray into two portions with the tray divider and thermal shield. Each portion separated by the tray divider and thermal shield are designated as a hot portion and a cold portion, respectively. The cold half of the tray is cooled by means of a conventional refrigerator.

In another embodiment, the method step of heating the tray includes conducting the flow of electric current from the socket or contacts to one or more heating filaments disposed within the tray, resistively heating the filaments by means of the electric current wherein one of the filaments is raised to a higher temperature than that of at least one other filament within the tray, and thermally transferring heat generated by the filaments to a top surface of the tray. The heating of the tray includes heating only the hot portion of the tray. Additionally, thermal interaction between the hot portion and the cold portion of the tray is prevented by means of the thermal shield.

The method step of discontinuing the flow of electric current to the tray through the socket or contacts includes stopping the flow of electric current by means of a thermistor connected to one or more of the filaments if at least one of the filaments reaches a predetermined undesired temperature.

In yet another embodiment, the method step of connecting the tray to the socket disposed within the mobile cart includes the steps of inserting one or more power pins disposed on the tray into a corresponding number of power plugs defined within the socket, inserting a pair of loop pins adjacently disposed on the tray next to the power pins into a corresponding pair of loop plugs defined within the socket, and inserting a pair of guide pins disposed on the tray into a corresponding pair of guide plugs defined within the socket. The power pins are then electrically connected to the power plugs before the loop pins are electrically connected to the loop plugs.

In a further embodiment, the method further includes the step of cycling the flow of electric current supplied to the tray on and off for predetermined amounts of time as determined by a controller board coupled to the socket.

In one of the illustrated embodiments, the method also includes powering down the mobile cart after a predetermined amount of time of inactivity has elapsed as determined by a controller board coupled to the socket.

While the apparatus and method has or will be described for the sake of grammatical fluidity with functional explanations, it is to be expressly understood that the claims are not to be construed as necessarily limited in any way by the construction of "means" or "steps" limitations, but are to be accorded the full scope of the meaning and equivalents of the definition provided by the claims under the judicial doctrine of equivalents The invention can be better visualized by turning now to the following drawings wherein like elements are referenced by like numerals.

### Brief Description of the Drawings

Fig. 1A is a top perspective view of the contact plate of one embodiment of the tray.
Fig. 1B is a perspective view of a contact tray stabilizer used to provide power to the tray seen in Fig. 1A.
Fig. 1C is a perspective view of a flat tray stabilizer used to support the tray seen in Fig. 1A.
Fig. 2 is a bottom plan view of an alternative embodiment of the tray comprising a plurality of pins.
Fig. 3 is a magnified bottom perspective view of the tray seen in Fig. 2.
Fig. 4 is a plan view of the heating elements disposed within the tray of Fig. 1A or Fig. 2.
Fig. 5 is an external perspective view of the dual climate cart with the doors closed.
Fig. 6 is a front view of one embodiment of the dual climate cart comprising a plurality of shelves and a plurality of plugs.
Fig. 7 is a side cross-sectional view of the dual climate cart seen in Fig. 6.
Fig. 8 is a perspective view of the shelves of the dual climate cart seen in Fig. 6.
Fig. 9 is an internal top plan view of one of the shelves of the dual climate cart seen in Fig. 6.
Fig. 10 is a perspective view of a plug used in the dual climate cart seen in Fig. 6.
Fig. 11 is a top plan view of the plug seen in Fig. 10.
Fig. 12 is an exploded view of the plug seen in Fig. 10.
Fig. 13 is a block diagram of the controller board disposed within the dual climate cart.
Fig. 14 is an enlarged perspective view of the coupling between the plug and the tray seen in Fig. 2.
Fig. 15 is a side cross-sectional view of the coupling between the plug and the tray seen in Fig. 2.
Fig. 16 is a top plan view of the tray seen in Fig. 1A.
Fig. 17 is a side plan view of the tray seen in Fig. 16.
Fig. 18 is an enlarged cross-sectional view of the coupling between the contact tray stabilizer seen in Fig. 1 B and the tray seen Fig. 16.
Fig. 19 is a rear plan view of the coupling between the contact tray stabilizer and the tray seen in Fig. 18.
Fig. 20 is a front plan view of one of the contact wheels disposed within the contact tray stabilizers seen in Fig. 1 B.
Fig. 21 is a front perspective view of an alternative embodiment of the dual climate cart comprising a plurality of contact tray stabilizers, flat tray stabilizers, and trays seen in Fig. 1A.
Fig. 22 is a perspective view of the contact tray stabilizers and flat tray stabilizers of the dual climate cart seen in Fig. 21.
Fig. 23A is a top plan plan view of the dual climate cart seen in Fig. 21 including a plurality of magnets, before a tray is inserted into the cart.
Fig. 23B is a top plan view of the dual climate cart seen in Fig. 21, after a tray is inserted into the cart.
Fig. 24 is an enlarged side view of the coupling of the tray to the rear portion of the dual climate cart via a plurality of magnets.
Fig. 25 is a plan view of an alternative embodiment of the heating elements disposed within the tray including a thermistor coupled to each of the filaments.
Fig. 26 is a plan view of an alternative embodiment of the heating elements disposed within the tray including a thermistor coupled to the substrate of the heating element.
Fig. 27 is a plan view of an alternative not being part of the present invention of the heating elements disposed within the tray including a thermostat coupled to each of the filaments.
Fig. 28 is a plan view of an alternative not being part of the present invention of the heating elements disposed within the tray including a thermostat coupled to the substrate of the heating element.
Fig. 29 is an enlarged bottom perspective view of an alternative embodiment of the tray comprising an AC/DC input and a USB port.
Fig. 30A is a top plan view of the alternative embodiment of the tray seen in Fig. 29, further comprising a charger coupled to the AC/DC input.
Fig. 30B is a diagrammatic view of a charging unit coupled to a plurality of trays seen in Fig. 30A, the charging unit including an extension cable with a charging unit plug at its distal end shown in an enlarged view in an inset portion of the drawing.

The invention and its various embodiments can now be better understood by turning to the following detailed description of the preferred embodiments which are presented as illustrated examples of the invention defined in the claims. It is expressly understood that the invention as defined by the claims may be broader than the illustrated embodiments described below.

### Detailed Description of the Preferred Embodiments

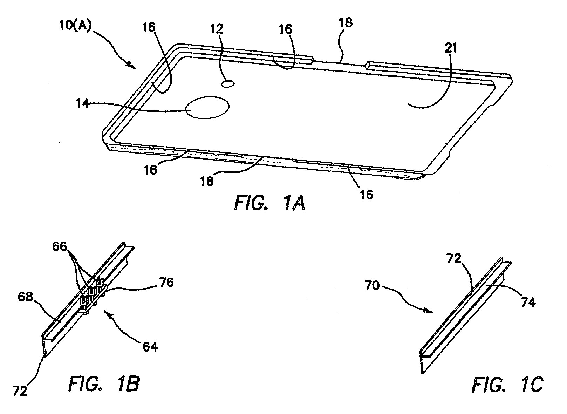

A first embodiment of the current invention can be seen in Figs. 1A - 1C. Fig. 1A is a perspective view of a top surface 21 a tray generally denoted by reference numeral 10(A). The tray 10(A) is substantially rectangular shaped, specifically it comprises four corners and is preferably comprised of a polymer such as sheet molding compound, polyester based glass reinforced polymers, polyester, melamine, or a paper material impregnated with phenol and/or melamine. However it is to be expressly understood that other thermoset materials known in the art for their heat retention characteristics may also be well within the use of one ordinarily skilled in the art.

Disposed around the outside edges of the tray 10(A) is an upturned lip 16. The lip 16 extends from the flat surface 21 to form a border or barrier around the outer edges of the tray 10(A) to prevent any dishware or comestible items disposed on the surface 21 from sliding off of the tray 10(A). In one embodiment, the tray 10(A) comprises a gap 18 or thinned region of the lip defined within a portion of at least two opposing sides of the lip 16 as seen in Fig. 1A. The gap 18 is preferably defined within the lip 16 at the middle of the tray 10(A), or in other words, the gap 18 is defined within the lip 16 so as to bifurcate or divide the tray 10(A) into equally sized halves or other defined portions. The gap 18 allows for a thermal barrier or other physical partition to be disposed across the tray 10(A) as will be further detailed below.

The top surface 21 of the tray 10(A) includes a large circular relief portion 14 sized and shaped to accommodate a conventional plate with comestible items or food to be disposed thereon. Additionally, the surface 21 also comprises a small circular relief portion 12 sized and shaped to accommodate a conventional bowl with comestible items or food to be disposed therein. Both the large and small circular relief portions 14, 12 are preferably disposed on the same side of the surface 21, adjacent to one another. The exact size of the large and small relief portions 14, 12 and their exact placement within the surface 21 of the tray 10(A) as shown in Fig. 1A is meant to be for illustrative purposes only. Fewer or additional relief portions of varying sizes may be disposed anywhere across the surface 21 of the tray 10(A) without departing from the original spirit and scope of the invention.

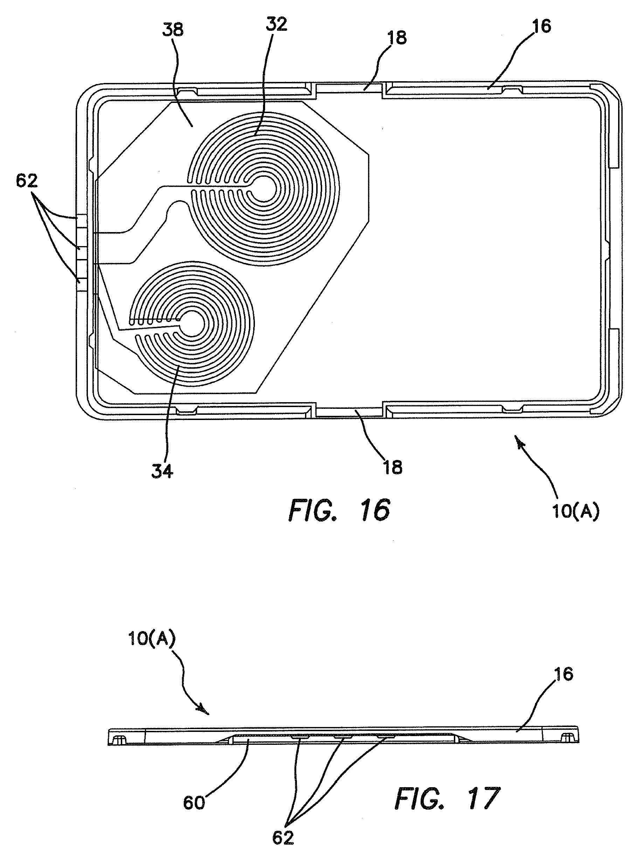

Turning to Figs. 16 and 17, an embodiment of the tray 10(A) can be seen. Fig. 16 is a top plan view with partial cut-away of the tray 10(A) showing a heating element 38 comprising a plate filament 32 and a bowl filament 34 disposed within the tray 10(A) and described in further detail below. Each of the filaments 32, 34 are coupled to a plurality of contacts 62 disposed within a lateral edge of the lip 16. The contacts 62 are preferably disposed within a tray cavity 60 defined within the lip 16 of the tray 10(A) as best seen in Fig. 17, with the contacts 62 facing in the downward position relative to the surface 21 of the tray 10(A).

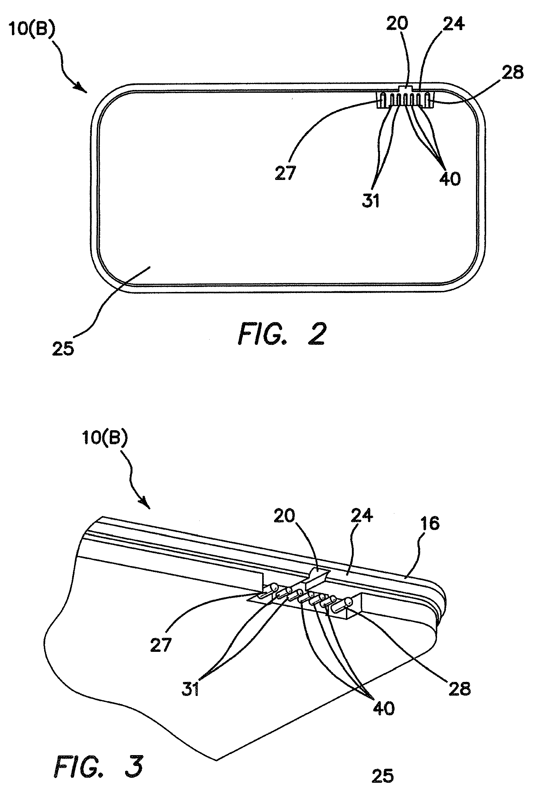

In Figs. 2 and 3, another embodiment of the bottom surface 25 of a tray 10(B) is shown. A recess 24 is defined into the tray 10(B) which is covered by the lip 16 of the top surface 21 seen in Fig. 1A. Defined into the top portion of the recess 24 is a notch 20. The notch 20 is substantially rectangular shaped and tapers inwardly within notch 20 to a narrower width the further that notch 20 is defined within the lip 16. A plurality of pins 27, 28, 31, 40 are disposed inside the recess 24. The outermost pins disposed at either extreme of the recess 24 are a pair of guide pins 27, 28, specifically a "left" guide pin 27, and a "right" guide pin 28 as seen in Fig. 2. Disposed next to the right guide pin 28 is a series of power pins 40 which are electrically connectable at their proximate ends to a current or power source which provides current to the tray 10(B) as will be further detailed below.

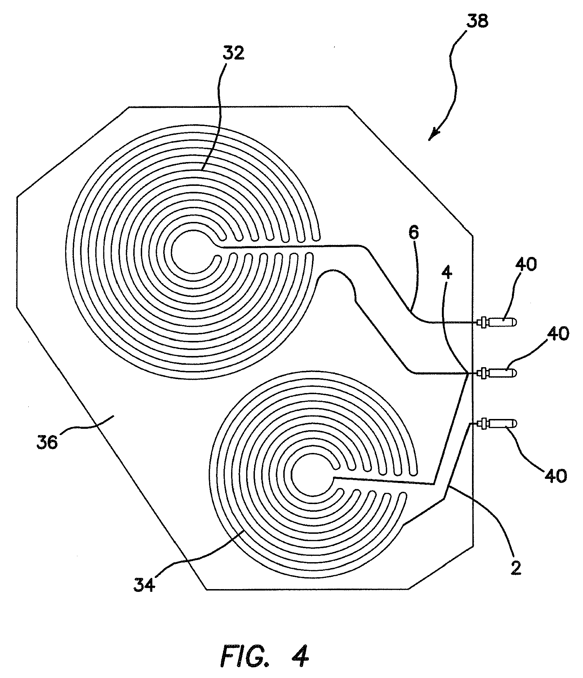

The three power pins 40 of the tray 10(B) or the contacts 62 of the tray 10(A) are also electrically coupled to the plate filament 32 and a bowl filament 34 shown in Fig. 4. The filaments 32, 34 are disposed on the top surface of a substrate 36 comprised of lightweight fabric material such as polyester. The filaments 32, 34 themselves are composed of 50% to 70% silver fibers and 50% to 30% carbon fibers, and more preferably 60% silver fibers and 40% carbon fibers. However it is to be expressly understood that other ratios and resistive heating materials comprised of conductive metals or metal alloys such as gold, copper, or aluminium combined with other insulators such as silicon, glass, or plastic polymers at varying percentages may be used without departing from the claimed embodiments. The filaments 32, 34 and substrate 36 thus combine to form a heating element 38. The filaments 32, 34 are disposed on the substrate 36 in a semi-circular pattern. The heating element 38 is substantially sheet-like, namely it is substantially flat with a thin cross-sectional area. The heating element 38, coupled to the power pins 40 or the contacts 62, is disposed underneath the surface 21 of the tray 10(A) such that the plate filament 32 is disposed beneath the large relief portion 14, and the bowl filament 34 is disposed beneath the small relief portion 12. The heating element 38 is in thermal communication with the top surface 21 so that when electric current is travelling through the filaments 32, 34 as provided from the power pins 40, resistively generated heat is created which in turn heats the adjacent top surface 21 and the large and small circular relief portions 14, 12 respectively.

Returning to Figs. 2 and 3, adjacent to the power pins 40 and the left guide pin 27 in the tray 10(B) are a pair of loop pins 31. The loop pins 31 are used for recognizing if the tray 10(A) is arranged inside of a dual climate cart 100 as will be detailed below. The power pins 40 and the loop pins 31 are of identical shape and dimension whereas the guide pins 27, 28 have a larger diameter and project further out from the recess 24 than the power pins 40 and the loop pins 31. Also as can be seen in Fig. 3, the lip 16 of the tray 10(B) forms a "step" so that the tray 10(B) may be held in a safe and comfortable manner by the hands of a user when the tray 10(B) is hot.

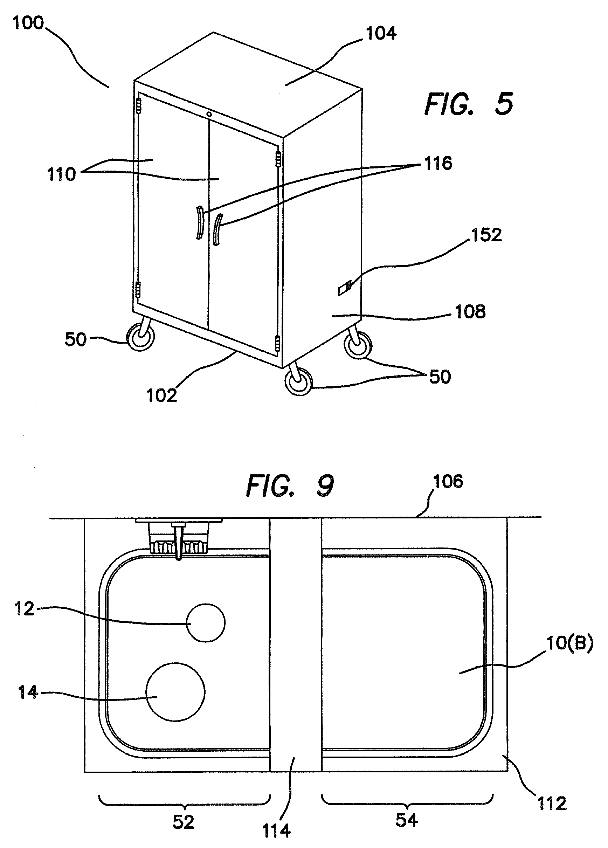

The tray 10(A) or 10(B) or a plurality of trays 10(A) or trays 10(B) receive power through a dual climate cart 100 as best seen in Figs. 5-9 and 21-23B. As seen in Fig. 5, the dual climate cart 100 comprises a base 102, a top surface 104, a back portion 106 indicated in Fig. 9, and two opposing side walls 108 configured in a substantially rectangular shape with a pair of French style doors 110 that allows the user to insert or remove a plurality of trays 10(A) or 10(B) from the cart 100. The doors 110 may be opened or closed using a pair of handles 116 coupled to the doors 110. The dual climate cart 100 is comprised of plastic and plastic composites; however other materials such as metals or metal alloys may be used without departing from the original spirit and scope of the invention. A plurality of casters 50 are coupled to the base portion 102 so as to make the dual climate cart 100 mobile and more easily manoeuvrable.

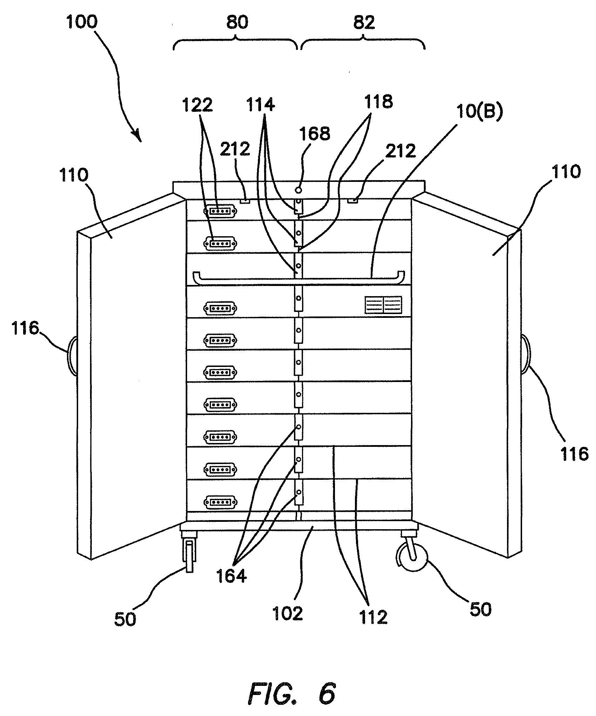

The dual climate cart 100 also comprises a plurality of tray dividers 114 within the interior of the cart 100 as best seen in Figs. 6-8, 21, and 22. Coupled to each of the plurality of tray dividers 114 and the rear portion 106 is a thermal shield 118. The thermal shield 118 is preferably comprised of semi-rigid or semi-flexible material such as silicone, rubber, plastic, plastic composites and the like, however other materials now know or later devised that may provide a sufficient thermal or temperature barrier may also be used without departing from the original spirit and scope of the invention. The thermal shield 118 is positioned above the tray divider 114 by a sufficient space to allow for the thickness of the tray 10(A), 10(B) to be disposed beneath the thermal shield 118 and coupled to the dual climate cart 100 as further detailed below.

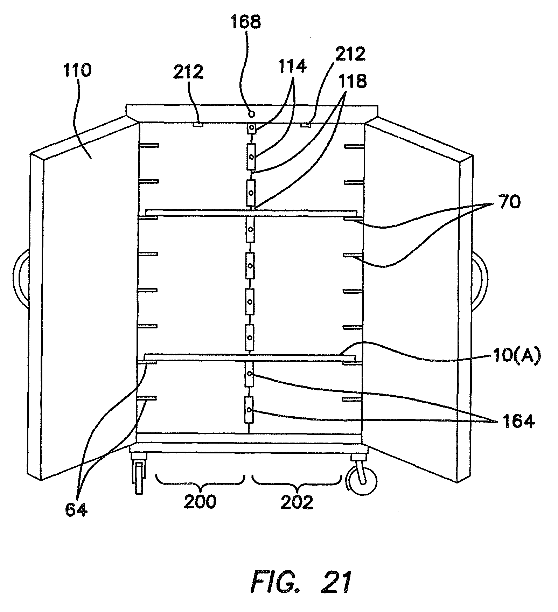

The dual climate cart 100 also comprises a plurality of kill switches 212 disposed underneath the top surface 104, namely one kill switch 212 for each door 110 as seen in Figs. 6 and 21. Each kill switch 212 is retractable and includes a means for recessing the switch 212 into the top surface 104 each time the corresponding door 110 is shut, much like the light switch present in most conventional refrigerators. With the kill switch 212 retracted, the cart 100 is allowed to supply power to the trays 10(A), 10(B) as detailed below. When a door 110 is opened, the corresponding kill switch 212 extends out, breaking a circuit within the cart 100 as is known in the art and all power is cut off to the trays 10(A), 10(B). With all power flow stopped, a user may then safely remove the trays 10(A), 10(B) without fear of electric shock or arcing between the tray 10(A), 10(B) and cart 100. The user may then shut the door 110 again, thus retracting the kill switch 212 and resuming power flow to the trays 10(A), 10(B).

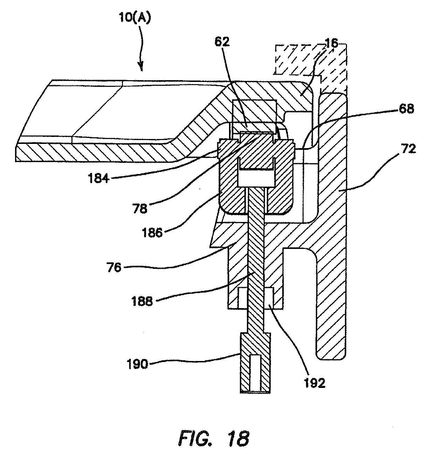

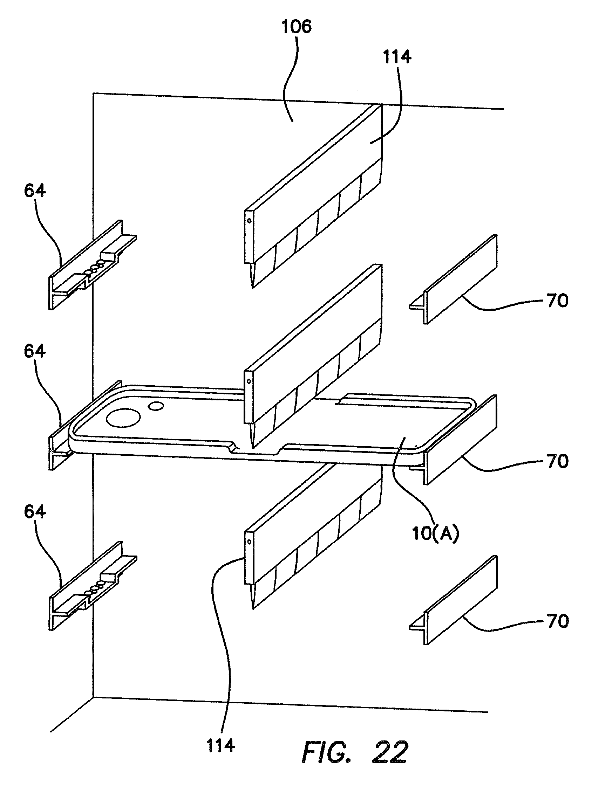

In a first embodiment, the tray dividers 114 are coupled to the rear portion 106 of the cart 100 as seen in Fig. 22. Also coupled to the rear portion 106 of the cart 100 is a plurality of tray stabilizers, specifically a plurality of contact tray stabilizers 64 and a corresponding plurality of flat tray stabilizers 70. The flat tray stabilizers 70, seen in greater detail in Fig. 1C, comprise a backing portion 72 and a flange 74 coupled to the backing portion 72. The contact tray stabilizers 64 likewise comprise a backing portion 72 coupled to a contact flange 68, however the contact flange 68 comprises a recessed or lowered portion 76 which includes a plurality of contact wheels 66. Both the contact stabilizers 64 and flat stabilizers 70 are coupled to either side walls 108 in opposing pairs as seen in Figs. 22-23B. Together, the contact stabilizers 64 and flat stabilizers 70 form a platform or means for maintaining a tray 10(A) in a stable, stationary position as seen in Fig. 22 as is described in further detail below. Additionally, while in Figs. 1B, 1C, 18 and 22 it is seen that the contact tray stabilizers 64 and flat tray stabilizers 70 comprise a substantially "T" shaped cross section, the stabilizers 64, 70 may also comprise a substantially "U" or "C" shaped cross section as seen in the broken line section of backing portion 72 in Fig. 18. With the backing portion 72 of each stabilizer 64, 70 comprising a substantially "C" shaped cross section, the stabilizers 64, 70 provide a downward reactionary force to counteract the upward force exerted by the contact wheels 66 which may be spring loaded, thus increasing the overall stability of the tray 10(A). Finally, each stabilizer 64, 70 may also comprise means for draining a fluid such as water each time the stabilizers 64, 70 are washed. For example, each stabilizer 64, 70 may comprise a small drain, trench, and/or spillway (not shown) defined within its respective flanges 68, 74 in order to effectively draw water or other fluid away from the contact wheels 66 and out of the cart 100.

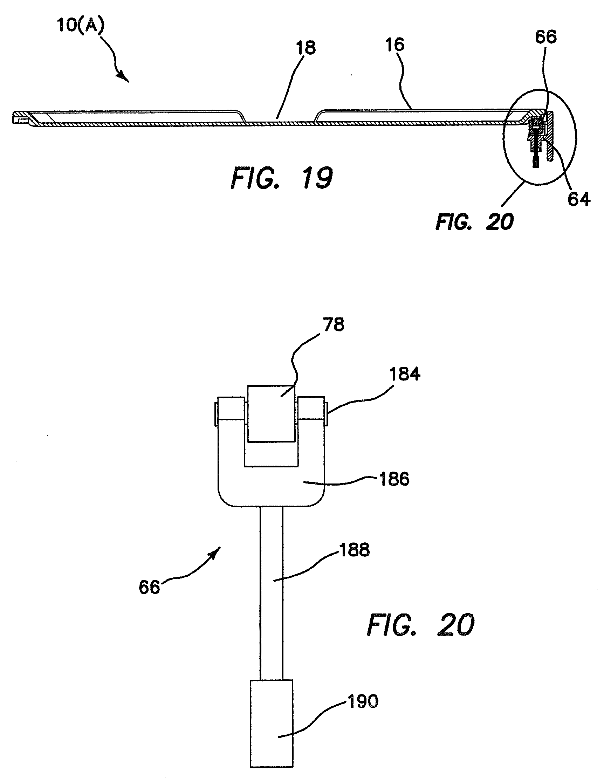

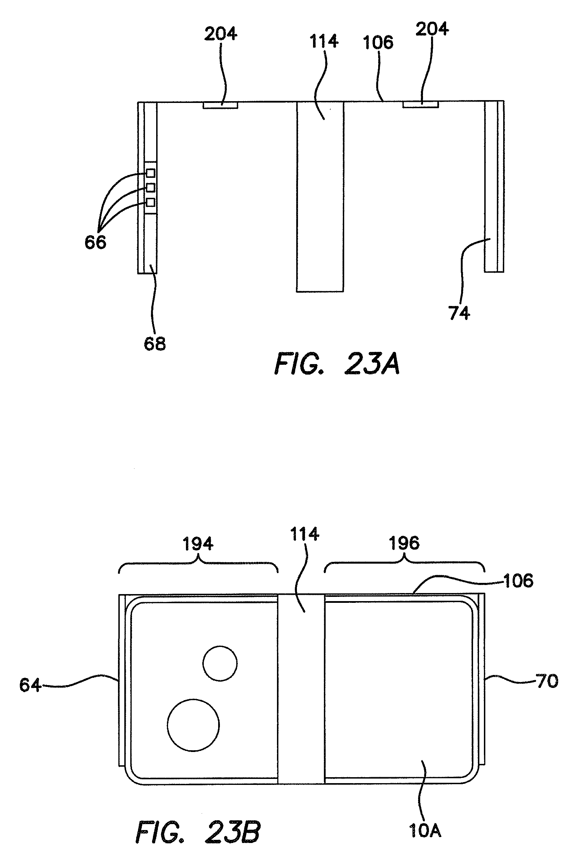

The contact wheels 66 are disposed within the lowered portion 76 of each of the plurality of contact stabilizers 64 in a single file series as shown in Fig. 1 B. The contact wheels 66 are disposed within the contact stabilizers 64 such that the top most portion of the contact wheels 66, namely the roller 78 as best seen in Fig. 20, is of approximately equal height with the surface of the contact flange 68. Additionally, the contact wheels 66 are disposed substantially within the center of the contact flange 68 as seen in the top plan view of Fig. 23A. While three contact wheels 66 are shown in the figures for each of the contact stabilizers 64, fewer or additional contact wheels 66 may be present without departing from the original spirit and scope of the invention.

To insert a tray 10(A) into the dual climate cart 100, a user first places the lateral edges of the tray 10(A) proximate to at least one of the plurality of the flat stabilizers 70 and at least one of the plurality of contact stabilizers 64. The lip 16 of the tray 10(A) is then manipulated to slide the tray 10(A) distally across the flange 74 and the contact flange 64 respectively towards the back portion 106 of the cart 100. As the tray 10(A) is being slid into the cart 100, the rollers 78 of the contact wheels 66 make contact with the bottom portion of the lip 16 and help to guide the tray 10(A) in a straight line within the cart 100. Additionally, as the tray 10(A) is being inserted into a selected position within the cart 100, the thermal shield 118 coupled to the tray divider 114 enters the gap 18 defined within each longitudinal edge of the lip 16 of the tray 10(A), thereby interposing a thermal barrier across the tray 10(A) and defining at least two separate thermal portions of tray 10(A) as seen in Figs. 21, 22, and 23B. The thermal shield 118 separates the respective portions of the tray 10(A) such that the heating element 38 disposed underneath the surface of the tray 10(A) is maintained within one of the at least two portions, thus making that portion the "hot" portion 194 as seen in Fig. 23B. The remaining portion is designated as a "cold" portion 196. By dividing each tray 10(A) within the cart 100 into at least two portions 194, 196, each thermal shield 118 provides a thermal barrier between the portions 194, 196 and substantially prevents thermal interaction there between. When a plurality of trays 10(A) are disposed within the cart 100, the plurality of thermal shields 118 cooperate to effectively divide the entire cart 100 into two temperature zones, namely a "hot" zone 200 comprising the contact flange 64 and a "cold" zone 202 as seen in Fig. 21. The cold zone 202 may include a conventional refrigerator to reduce the temperature within the cold zone 202, or alternatively, the temperature within the cold zone 202 may be maintained substantially at room temperature by means of a circulating fan or the like as is known in the art.

When the tray 10(A) is fully disposed within the cart 100 as seen in Fig. 23B, the contacts 62 of the tray 10(A) come to rest on top of the contact wheels 66 as best seen in Figs. 18 and 19. Greater understanding of each of the contact wheels 66 may be had by turning to Figs. 18 and 20. Each contact wheel 66 comprises a stem 188 with a U-shaped fork 186 on its distal end and a base 190 on its proximal end. The fork 186 supports an axle 184 which in turn supports the roller 78. The roller 78 is free to rotate about the axle 184 when a tray 10(A) is not present and both it and the axel 184 are comprised of a highly electrically conductive material such as metal, metal alloys, and the like. When a tray 10(A) in inserted into the cart 100, the bottom of the lip 16 make contact the rollers 78 which begin rotating as the tray 10(A) is pushed distally into the cart 100. The rollers 78 continue rotating until the contacts 62 within the cavity 60 are disposed over the contact wheels 66 when tray 10(A) by back wall 106. The rollers 78 then make contact with the contacts 62, the rollers 78 to stop rotating and press against the axle 184 as seen in the cross sectional view of Fig. 18. Wires or electrical leads (not shown) as known in the art are disposed within the fork 186 and coupled to the axle 184 at its distal ends. The proximal ends of the wires or leads are disposed with the fork 186 and stem 188 and are coupled to a conduit 192 disposed within the lower portion 76 of the contact flange 64. Each conduit 192 for each corresponding contact wheel 66 is then in turn coupled to an electronics assembly and controller board 150 for the cart 100 as will be described in further detail below.

Additionally, other means for electrically coupling the trays 10(A) may also be employed such as, but not limited to, spring loaded plates or spring biased contacts (not shown). The spring loaded plates or spring biased contacts are disposed within the contact flange 64 and are in a retracted position as the tray 10(A) is being inserted, and then expand upwards into an extended position, forcing electrical coupling between the spring loaded plates or spring biased contacts and the contacts 62 of the tray 10(A). Alternative means such as interlocking spades or contacts, magnetic induction, and other means now known or later devised for transferring electricity from a source to a resistive heating element may also be used without departing from the original spirit and scope of the invention.

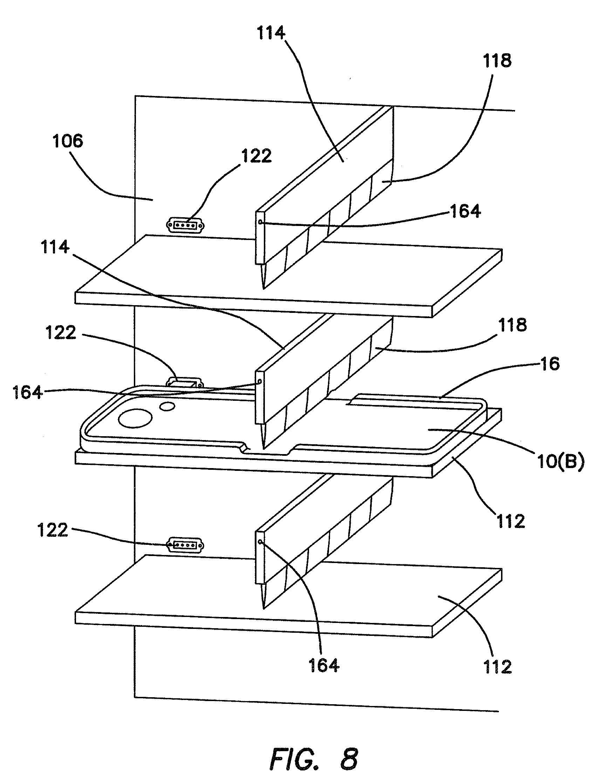

In a separate embodiment seen in Figs. 6-9, the tray dividers 114 support a plurality of shelves 112 which in turn support a corresponding plurality of trays 10(B) therein as seen in Fig. 8. Each shelf 112 extends across the full length between the side walls 108 and is coupled to the back portion 106 and the tray divider 114 is disposed directly beneath it. The specific number of shelves 112 and trays 10(B) shown is meant to be for illustrative purposes only. It can be readily appreciated by one skilled in the art that fewer or additional shelves 112 with fewer or additional trays 10(B) may be used without departing from the original scope of the invention.

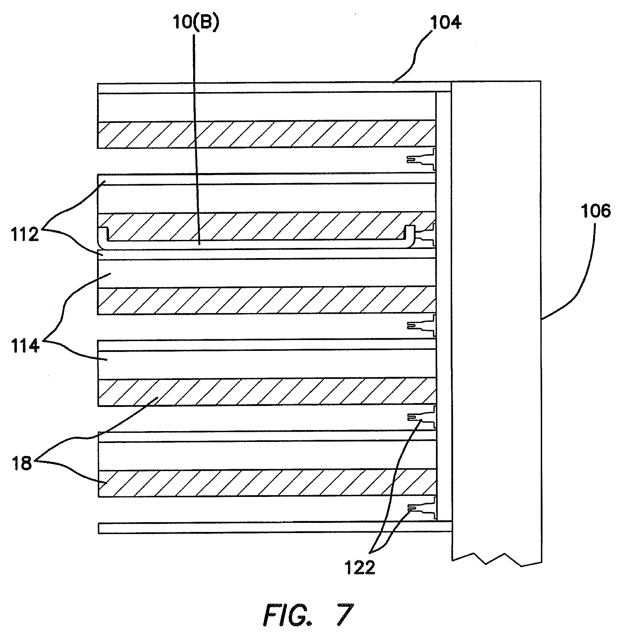

Figs. 7-9 depict the shelf 112 when it is configured to accommodate and support a tray 10(B). The tray 10(B) is disposed onto the shelf 112 by first lining up the gap 18 defined within the lip 16 of the tray 10(B) with the thermal shield 118. The thermal shield 118 is then inserted through the gap 18 and the tray 10(B) is then slid onto the shelf 112 with the recess 24 and plurality of pins 27, 28, 31, 40 shown in Fig. 2 facing the back portion 106 of the dual climate cart 100. As the thermal shield 118 is being slid through the gap 18 of the tray 10(B), the tray divider 114 and thermal shield 118 as seen in side view in Fig. 7 effectively bifurcates or divides the space above tray 10(B) into at least two portions as best seen in Fig. 9. The left hand portion of the tray 10(B) as seen in Fig. 9, which comprises the large and small relief portions 14, 12, is a "hot" portion 52, while the right hand portion of the tray 10(B) disposed on the other side of the tray divider 114 and thermal shield 118 is a "cold" portion 54. The thermal shield 118 keeps the hot and cold portions 52, 54 thermally separate and distinct as is further detailed below.

As the tray 10(B) is being slid toward the rear portion 106 of the dual climate cart 100, the recess 24 is also aligned with a socket 122 coupled to the rear portion 106 as will be described in further detail below in connection with Fig. 7. The process of aligning the gap 18 of the tray 10(B) with the thermal shield 118 and then sliding it into the shelf 112 may then be repeated for a plurality of trays for as many shelves 112 as there are present within the dual climate cart 100 as seen in Figs. 6-8.

The dual climate cart 100 comprises a plurality of sockets 122 coupled to the back portion 106 of the dual climate cart 100 as seen in the cross sectional view of Fig. 7. The dual climate cart 100 comprises as many sockets 122 as there are trays 10 to be inserted, specifically one socket 122 on the left hand side of each shelf 122 for as many shelves 122 that are present within the dual climate cart 100.

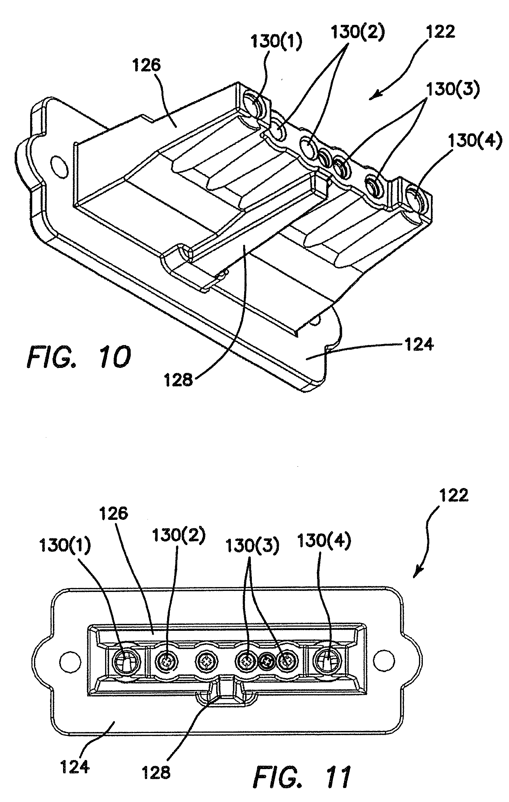

Greater detail of the socket 122 can be seen in Figs. 10-12. The socket 122 comprises a socket base 124 and a pin receiver 126 disposed thereon. Disposed along the length of one side of the pin receiver 126 is a male key 128. The male key 128 extends from the socket base 124 to the top of the pin receiver 126. The male key 128 is also substantially tapered in shape with a larger width at the bottom near the socket base 124 than at the top of the key 128 near the end of the pin receiver 126. The socket 122 is preferably comprised of injection molded plastic, however other light weight electrically insulating materials now known or later devised may also be used without departing from the original spirit and scope of the invention.

The pin receiver 126 comprises a plurality of female plugs 130(1-4) defined into the distal tip of the pin receiver 126. The "left" and "right" most plugs 130(1, 4) as seen in Figs. 10 and 11 is a left guide plug 130(1) and a right guide plug 130(4) respectively. Adjacent to the left guide plug 130(1) is a pair of loop plugs 130(2), and adjacent to the right guide plug 130(4) is a set of three power plugs 130(3). All of the plugs 130(1-4) are substantially cylindrical in shape however the left guide plug 130(1) and the right guide plug 130(4) project further out of the distal end of the pin receiver 126 than the loop plugs 130(2) or power plugs 130(3) as best seen in Fig. 10.

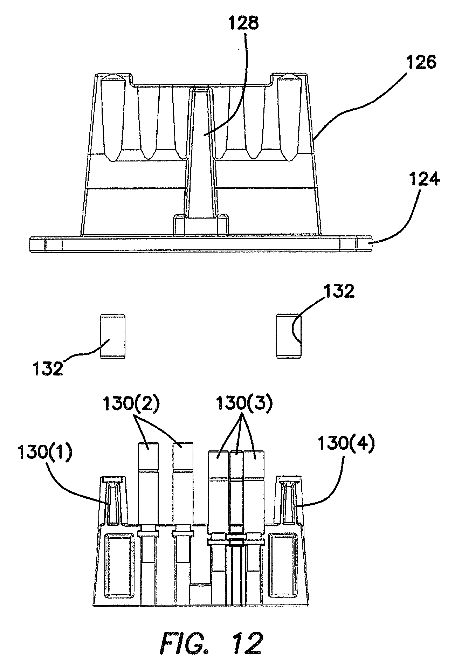

An exploded view of the internal components of the socket 122 is shown in Fig. 12. Both the left guide plug 130(1) and right guide plug 130(4) comprise a plug fitting 132 at their distal ends which extend the length of the guide plugs 130(1), 130(4) over that of the loop plugs 130(2) and power plugs 130(3). Both the left guide plug 130(1) and the right guide plug 130(4) are sized and shaped to accommodate the left guide pin 27 and right guide pin 28 respectively. The loop plugs 130(2) and power plugs 130(3) are substantially similar to each other in terms of size and shape, however as seen in Fig. 12, the power plugs 130(3) are staggered in a slightly lower position within the pin receiver 126 of the socket 122 than that of the loop plugs 130(2). The power plugs 130(3) and loop plugs 130(2) are sized and shaped to accommodate the power pins 40 and the loop pins 31 respectively. The proximal ends of the power plugs 130(3) and the loop plugs 130(2) are electrically coupled to the inner circuitry of the charging unit 100 through the socket base 124 as is described in further detail below.

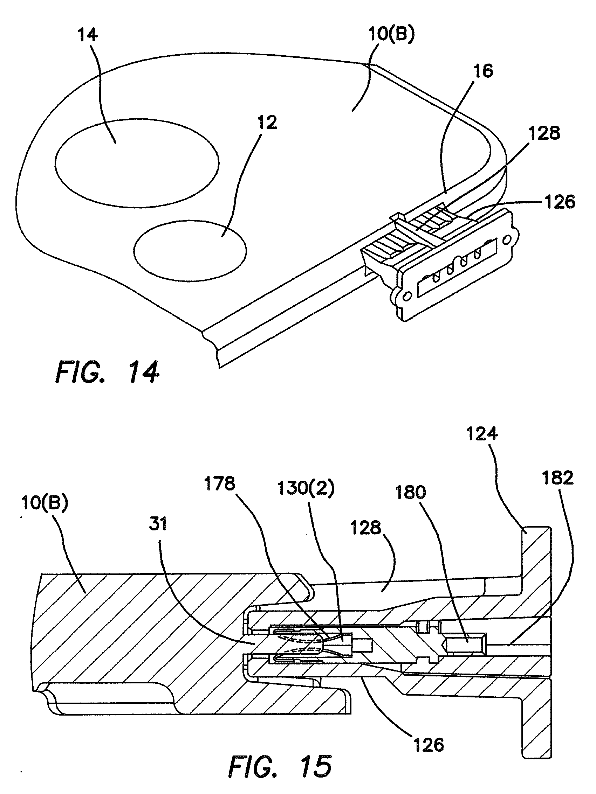

As the tray 10(B) is further pushed into the dual climate cart 100, the pin receiver 126 enters the recess 24 of the tray 10(B) as depicted in Fig. 14. The left guide pin 27 and the right guide pin 28 of the tray 10(B) are then inserted into the left guide plug 130(1) and right guide plug 130(4) respectively. As the left guide pin 27 and right guide pin 28 are pushed further into their respective plugs 130(1), 130(4), the power pins 40 and loop pins 31 are also pushed into their respective plugs, specifically power plugs 130(3) for the power pins 40 and loop plugs 130(2) for loop pins 31. As the guide pins 27, 28 are inserted into the socket 122, due to their extended size and length as compared to that of the loop pins 31 and power pins 40, they serve to guide and orientate the tray 10(B) as it is being inserted into the socket 122 so that the remaining pins 31, 40 are properly matched up to their corresponding plugs 130 within the socket 122. The alignment of the pins 31, 40 with their corresponding plugs 130 of the socket 122 by the guide pins 27, 28 minimizes the stress placed on the power pins 40 and loop pins 31 and ensures that a proper electrical connection with the dual climate cart 100 is achieved. Because the power plugs 130(3) are in a staggered position below that of the loop plugs 130(2), the power pins 40 make electrical contact with the socket 122 after that of the loop pins 31. As the pins disposed on the tray 10(B) are being pushed into the stationary socket 122, the male key 128 disposed on top of the socket 122 as seen in the cross sectional view of Fig. 11 is inserted into the notch 20 that is defined into the tray 10(B). The insertion of the male key 128 further ensures that any lateral movement of the tray 10(B) is prevented and that proper alignment between it and the socket 122 is obtained, as well as increasing the mechanical strength of the coupling between tray 10(B) and socket 122.

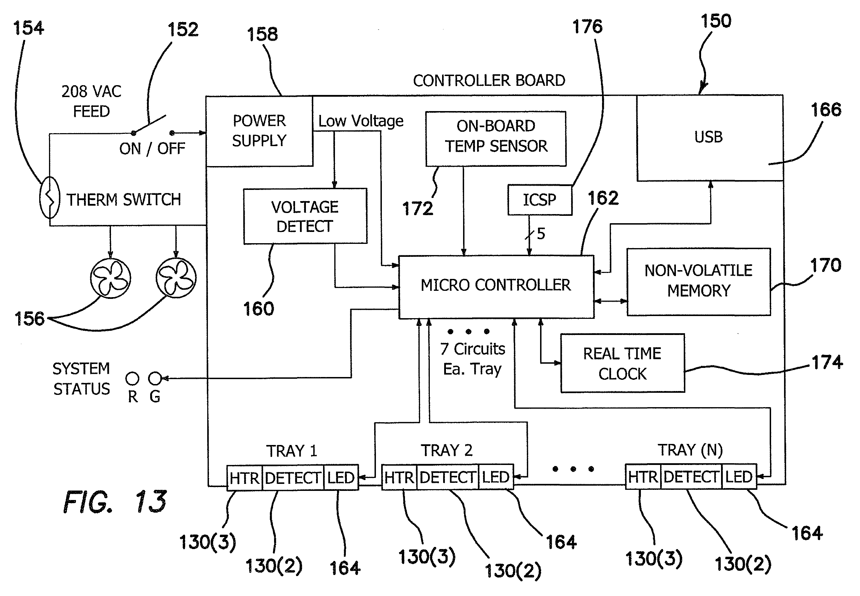

After a plurality of trays 10(A) or 10(B) have been properly inserted into the dual climate cart 100, electrical current is then supplied to the trays 10(A) or 10(B) through each of the contact wheels 66 or corresponding sockets 122, respectively, in a regulated manner. The flow of electric current is regulated by a controller board 150 disposed within the dual climate cart 100 and which is shown in block diagram form in Fig. 13. The dual climate cart 100 also comprises a power switch 152 as seen in Fig. 5, an internal thermal switch 154 and a plurality of fans 156 which are electrically coupled to the controller board 150, but are not controlled by it. The software contained on the controller board 150 not only controls the current delivered to each tray 10(A) or 10(B), but also records the status of the heating of each tray 10(A) or 10(B).

External power is delivered from an external source to the dual climate cart 100 by manipulating the power switch 152 on one of the side walls 108 which enters the controller board 150 through a power supply 158. From the power supply 158, electrical current is sent to a voltage detector 160 and to a microcontroller 162. The voltage detector 160 comprises means for detecting the specific voltage of the incoming electrical current received at the power supply 158 and relays that determined value to the microcontroller 162. The microcontroller 162 is a flash-based microcontroller as is known in the art which is used to control and regulate the current delivered to each of the trays 10, and by extension the temperature of trays 10, inserted into the dual climate cart 100. The microcontroller 162 also serves as a means for indicating to a user whether or not a tray 10(A) or 10(B) is sufficiently warm by illuminating a plurality of LED tray status lights 164 disposed in the front faces of the tray dividers 114, one tray status light 164 being disposed for each corresponding tray 10(A) or 10(B) inserted into the dual climate cart 100 as seen in Figs. 6, 8, 21, and 22. In addition, the microcontroller 162 may also indicate the general status of the dual climate cart 100 itself by illuminating a LED main status light 168 disposed on the front face of the top surface 104 as also seen in Fig. 6. The microcontroller 162 also comprises means for interfacing with a universal serial bus (USB) port 166 disposed within the controller board 150.

Also coupled to the microcontroller 162 is a non-volatile memory 170, an on-board temperature monitor 172, a real time clock 174, and an in-circuit serial programming (ICSP) device 176. The non-volatile memory 170 is a standard ROM or FLASH memory chip that is well known in the art that is capable of retaining data even when the cart 100 is powered down. The on-board temperature monitor 172 comprises means for measuring and monitoring the temperature of the controller board 150 itself anywhere within the range of -20°C to 80°C. The ICSP device 176 facilitates updating software that is contained on the microcontroller 162 without having to remove it or any other components from the controller board 150. Finally, the real time clock (RTC) 174 comprises the means to track relative time and is used as part of logging various events recorded by the controller board 150 as will be further detailed below. The RTC 174 includes a replaceable battery to maintain the ability to log events while the cart 100 is powered down.

The controller board 150 and its various components are robust and can operate in temperatures ranging from -20°C to 80°C and can be further stored at temperatures between -40°C to 125°C. The controller board 150 also includes a conformal coating which allows it to be operated in humidity up to 95% non-condensing and withstand the possibility of errant sprays of water.

For one or more of the trays 10(A), after the dual climate cart 100 has been powered on initialized, a tray 10(A) is slid into the cart as described above. The power supply 158 constantly supplies a low level current to the contact wheels 66 through the conduit 192. After the contact wheels 66 make contact with the contacts 62 of the tray 10(A), a complete circuit is formed between the cart 100 and tray 10(A) and the corresponding tray status indicator 164 disposed on the tray divider 114 adjacent to the just inserted tray 10(A) is illuminated red indicating to a user that the tray 10(A) has been successfully inserted onto the contact wheels 66. A signal is also sent to the microcontroller 162 of the controller board 150 after the contacts 62 have been properly disposed and thus informing the microcontroller 162 that a tray 10(A) has been docked within the dual climate cart 100 at that particular position.

With the tray 10(A) in place, the microcontroller 162 then signals the power supply 158 to provide increased power to the rollers 78 of the contact wheels 66. The rollers 78 conduct the received electricity into the contacts 62 of the tray 10(A) which in turn conduct the electrical current through the plate filament 32 and bowl filament 34 under the top surface 21 of the tray 10(A) with about 0.4-1 Amp. Specifically, the increased current enters the bowl filament 34 and the plate filament 32 through the input lines 2 and 6 respectively, and exits through a common output line 4 as shown in Fig. 4. The three lines 2, 4, 6 correspond to the three contact wheels 66 seen in Figs. 1 B, each line 2, 4, 6 being coupled to only one roller 78. The filaments 32, 34 provide sufficient resistance such that heat is created which turn heats the large relief portion 14 and the small relief portion 12 of the tray 10(A). In order for power to be supplied to the contact wheels 66 and thus the tray 10(A), the contacts 62 must first complete a circuit with the rollers 78. If a circuit is not formed, the tray status indicator 164 will not illuminate and increased power will not be supplied to the contact wheels 66. This two step coupling process decreases the probability of arcing between the rollers 78 and the tray 10(A).

In a separate embodiment, after a tray 10(A) has been coupled to the contact wheels, the microcontroller 162 comprises means for signalling the power supply 158 to provide power to the roller 78 which corresponds to only the plate filament 32, only the bowl filament 34, or neither filament for the duration that the tray 10(A) is disposed within the dual climate cart 100. Alternatively, the microcontroller 162 may selectively activate the filaments 32, 34 in a staggered sequence, for example the bowl filament 34 may be selected to receive power before the plate filament 32 for a predetermined amount of time as determined by the RTC 174. After the predetermined amount of time has elapsed, the microcontroller 162 then signals the power supply 158 to provide power to the roller 78 which corresponds to the plate filament 32, allowing both filaments 32, 34 of the heating element 38 to heat together as disclosed above. The exact order of activation of the filaments 32, 34 described above is meant for illustrative purposes only and should in no way be construed as limiting the invention. Other sequences or cycles for providing power to the filaments 32, 34 not described herein can easily be appreciated by those skilled in the art as being within the original scope of the invention.

In a separate embodiment, after the dual climate cart 100 has been powered on and initialized, a tray 10(B) is slid into the cart 100 as described above. Due to the staggered configuration of the power plugs 130(3) and loop plugs 130(2) shown in Fig. 12, the power pins 40 are electrically coupled into the power plugs 130(3) before the loop pins 31 are electrically coupled into the loop plugs 130(2). As the loop pins 31 are inserted into the loop plugs 130(2), the pins 31 make contact with a lead 178 within each of the plugs 130(2) as shown in Fig. 15. In the base of the loop plugs 130(2) is a detection shunt 180 which is coupled to the microcontroller 162 and power supply 158 through a main 182. The power supply 158 constantly supplies power to each of the detection shunts 180 within each of the plurality of sockets 122 within the dual climate cart 100. Once the loop pins 31 make contact with the lead 178 as seen in Fig. 15, a complete circuit is formed with the detection shunt 180 and the corresponding tray status indicator 164 disposed on the tray divider 114 adjacent to the just inserted tray 10(B) is illuminated red indicating to a user that the tray 10(B) has been successfully inserted into the socket 122. A signal is also sent to the microcontroller 162 of the controller board 150 after the pair of loop pins 31 have been properly inserted and thus informing the microcontroller 162 that a tray 10(B) has been docked within the dual climate cart 100 at that particular shelf and position.

With the tray 10(B) in place, the microcontroller 162 then signals the power supply 158 to provide power the power plugs 130(3) of the socket 122. The power plugs 130(3) conduct the received electricity into the power pins 40 of the tray 10(B) which in turn conduct the electrical current through the plate filament 32 and bowl filament 34 under the top surface 21 of the tray 10(B) with about 0.4-1 Amp. The filaments 32, 34 provide sufficient resistance such that heat is created which turn heats the large relief portion 14 and the small relief portion 12 of the tray 10(B). Again in order for power to be supplied to the power plugs 130(3) and thus the tray 10(B), the loop pins 31 must first complete a circuit with the detection shunt 180. If a circuit is not formed, the tray status indicator 164 will not illuminate and power will not be supplied to the power plugs 130(3). This two step coupling process decreases the probability of arcing between the socket 122 and the tray 10(B).

As disclosed above and as seen in Fig. 13, the controller board 150 comprises means for detecting and supplying power to a plurality of trays 10(B) at the same time or during a common time interval. Each socket 122 within the dual climate cart 100 includes its own individual detection and power circuits as disclosed above which allows the microcontroller 162 to recognize when a tray 10(B) has been inserted into a specific position anywhere within the cart 100.

In a separate embodiment, after a tray 10(B) has been coupled to a socket 122, the microcontroller 162 includes means for signalling the power supply 158 to provide power the power plugs 130(3) which correspond to only the plate filament 32, only the bowl filament 34, or neither filament for the duration that the tray 10(B) is disposed within the dual climate cart 100. Alternatively, the microcontroller 162 may selectively activate the filaments 32, 34 in a staggered sequence, for example the bowl filament 34 may be selected to receive power before the plate filament 32 for a predetermined amount of time as determined by the RTC 174. After the predetermined amount of time has elapsed, the microcontroller 162 then signals the power supply 158 to provide power to the power plugs 130(3) which correspond to the plate filament 32, allowing both filaments 32, 34 of the heating element 38 to heat together as disclosed above. The exact order of activation of the filaments 32, 34 described above is meant for illustrative purposes only and should in no way be construed as limiting the current invention. Other sequences or cycles for providing power to the filaments 32, 34 not described herein can easily be appreciated by those skilled in the art as being within the original scope of the invention.

Regardless of which tray embodiment has been inserted, namely tray 10(A) or tray 10(B) which herein after is collrectively referenced as tray 10, the microcontroller 162 records the position of the tray 10 within the cart 100 and time of insertion via the RTC 174 into the non-volatile memory 170. Power is supplied to the inserted tray 10 for a predetermined amount of time as determined by the amount of current supplied by the external power source (not shown). For example, if the current supplied is 0.44 Amp, power is supplied to the tray 10 for four minutes and fifty seconds. After the end of the predetermined time as determined by the RTC 174, the flow of power to the tray 10 is stopped by the microcontroller 162 and the tray status indicator 164 is changed from red to green notifying the user that the tray 10 is now sufficiently warm and may be removed from the cart 100 or alternatively, have comestible items disposed within a plate or bowl placed on the large relief portion 14 and small relief portion 12 respectively. If the current of the external source is lower than 0.44 Amps or higher than 1 Amp, the amount of time that power is supplied to the tray 10 may be lengthened or shortened accordingly by the internal programming contained within the microcontroller 162. It is to be expressly understood however that the specific currents and elapsed operation times disclosed above are for illustrative purposes only. One skilled in the art may easily use similar current or duration of time values according to their specific needs in order to achieve alternative operational performance goals.

In one embodiment, if the tray 10 is not removed from the cart 100 after the initial period of power supply has been completed, the microcontroller 162 and RTC 174 then initiate a cycling program which maintains the tray 10 at a sufficiently warm temperature for as long as it is inserted into the cart 100. For example, depending upon on the voltage and current of the external source, the microcontroller 162 will alternate the power being supplied to the tray 10 on and off for predetermined amounts of time. For an external source voltage of 208-220 V, for instance, the microcontroller 162 will prevent power from flowing to the tray 10 for two minutes, then allow power to the tray 10 for thirty seconds, and then prevent flow for another two minutes and so on. This cycling of heating and cooling down periods allows the tray 10 to consistently maintain the heat generated from the initial heating up period while preventing overheating of the tray 10 and possible damage to the filaments 32, 34. If the voltage of the external source is lower than 208 V or higher than 220 V, the duration of each on and off cycle of power that is supplied to the tray 10 may be altered accordingly by the internal programming contained within the microcontroller 162. Again, it should explicitly understood that the above disclosed voltages are meant for illustrative purposes and that other similar values may also be used without departing from the original spirit and scope of the invention.

In another embodiment, if after an extended amount of time has elapsed and none of the plurality of trays 10 contained within the cart 100 have been removed after their initial charge and subsequent cycling, and no new trays 10 have been inserted, a system wide timeout is initiated by the controller board 150. The RTC 174 comprises means for monitoring the elapsed time that has taken place since at least one tray 10 was either removed from or inserted into the cart 100. When the elapsed time for inactivity has passed a predetermined threshold, the microcontroller 162 stops all power flow to all of the trays 10 currently inserted into the cart 100 allowing each tray 10 to slowly cool. Each tray status indicator 164 is then turned off and the main status light 168 in the top portion 104 of the cart 100 is illuminated with a red LED light notifying the user that the cart 100 is offline or is otherwise not heating the trays 10. In order to resume charging or the cycling of power to the trays 10, the power switch 152 must be manipulated by the user first to the "off' position and then back to the "on" position. Once back on, the cart 100 will charge the trays 10 as described above and then continue to cycle power on and off to the trays 10 until the threshold inactive time as tracked by the RTC 174 has once again elapsed. Should a tray 10 be inserted or removed from the cart 100 before the threshold inactive time is reached, the RTC 174 restarts the inactive elapsed time from zero.

In another embodiment, the controller board 150 includes the on-board temperature monitor 172 which monitors the temperature of the controller board 150 itself. If the controller board 150 exceeds a predetermined threshold temperature, preferably 75°C, a signal is sent from the on-board temperature monitor 172 to the microcontroller 162. The microcontroller 162 logs the event in the non-volatile memory 174 and then signals the sockets 122 to stop all power flow to the trays 1, allowing each tray 10 to slowly cool. Each tray status indicator 164 is then turned off and the main status light 168 in the top portion 104 of the cart 100 is illuminated with a red LED light notifying the user that the cart 100 is offline or is otherwise not heating the trays 10. In order to resume charging or the cycling of power to the trays 10 after the controller board 150 has cooled, the power switch 152 must be manipulated by the user to the "off" position and then back to the "on" position. Once back on, the cart 100 will charge the trays 10 as described above and then continue to cycle power on and off to the trays 10 until the threshold temperature of the controller board 150 has been exceeded as determined by the on-board temperature monitor 172.

In a further embodiment, the controller board 150 provides means for detecting and notifying a user if there is a power error present within an inserted tray 10. Once the presence of a tray 10 has been detected as described above, the microcontroller 162 initiates a continuity test between the socket 122 and its respective tray 10 by sending an electronic continuity signal to the socket 122. If the signal returns from the socket 122, it is determined by the microcontroller 162 that a successful coupling between the socket 122 and tray 10 is present and power from the power supply 158 is allowed to enter the tray 10. If the continuity signal sent to the socket 122 is not returned, a series of additional continuity signals are sent to the socket 122. If still no return signal is received, it is determined by the microcontroller 162 that an error exists in the coupling between the socket 122 and tray 10 and logs the error event in the non-volatile memory 170. The error may be caused by a broken power pin 40 on the tray 10 or an incomplete coupling between the power pins 40 and the power plugs 130(3), however no matter the cause, when an error is detected, power is prevented from entering the tray 10 and the corresponding tray status indicator 164 is illuminated with a flashing red LED light. The entire continuity test process preferably occurs within the first five seconds of the tray 10 being detected within the socket 122 as determined by the RTC 174 so as to give real-time notice to the user to remove the tray 10 and attempt to re-insert it, or to discard the tray 10 entirely. If a faulty tray 10 is removed from the cart 100, the corresponding tray status indicator 164 is reset and the socket 122 is ready to receive a new or different tray 10.

As described above and seen in Fig. 13, a USB port 166 is coupled to the microcontroller 162 and allows a user to connect their PC or laptop computer to the controller board 150 and service or view the operational history of the cart 100. After establishing a connection via the USB port 166, a user may access the programming of the microcontroller 162 and view the data contained on the non-volatile memory 170 through a standard software interface as is known in the art. If the cart 100 requires servicing, the user enters the date of service which is recorded onto the non-volatile memory 170 which then becomes part of the operational history of the cart 100. With access established to the microcontroller 162, the user may change the system wide timeout threshold value, that is, the amount of inactive time that may elapse without the insertion or removal of any of the plurality of trays 10 before the cart 100 goes offline and stops power flow to the trays 10 contained within it. The user may select the timeout threshold value from a predetermined list of ten, fifteen, twenty, thirty, or sixty minutes, however other time values not listed here may also be used without departing from the original spirit and scope of the invention. Additionally, the user may change the order in which the microcontroller 162 activates the filaments 32, 34 within the heating element 38, or alternatively, select not to heat either of the filaments 32, 34 at all.

In another embodiment, the user may download the contents of the non-volatile memory 170 onto their PC or laptop via the USB port 166. The contents of the non-volatile memory 170 that may be viewed and downloaded include the maximum and minimum temperature values of the controller board 150 as measured by the on-board temperature sensor 172. Other data values include the total time the cart 100 has been powered on, how many trays 10 have been inserted into each respective position within the cart 100 and how many heating and cool down cycles each tray 10 went through, how many times the cart 100 powered down after reaching the threshold for inactivity, and how many "short cycles" had taken place, namely how many times the cart 100 was turned off before the initial heating and cool down cycle of the trays 10 had been completed.

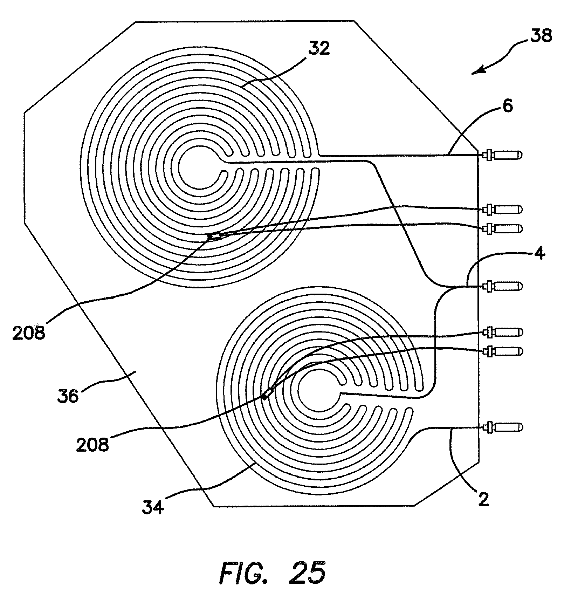

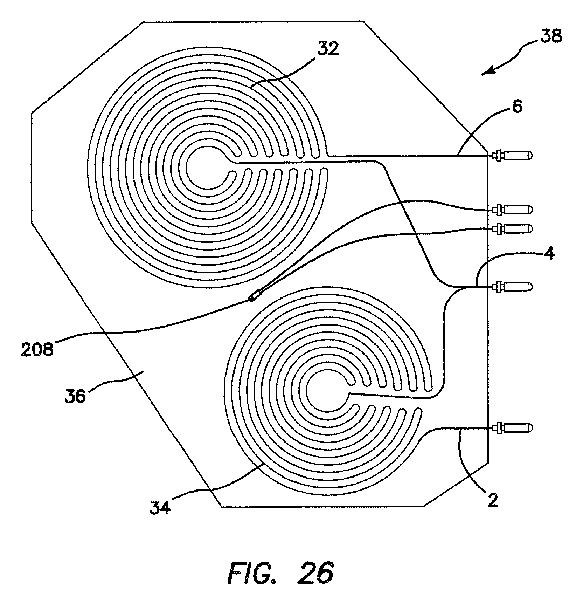

In another embodiment, the heating element 38 within each of the plurality of trays 10 includes a thermistor 208, such as a composite thermistor as is known in the art, coupled to one or both filaments 32, 34 as seen in Fig. 25. Briefly for the purposes of descriptive ease, the thermistor 208 may be any sensor in which its internal resistance changes relative to the temperature of the thermistor 208 itself. By measuring the current resistance of the thermistor 208, one could easily determine its temperature. By coupling the thermistor 208 directly to the filaments 32, 34 an accurate measurement of the temperatures of the filaments 32, 34 may be obtained. Each thermistor 208 within the tray 10(A), 10(B) is also coupled to the microcontroller 162. The microcontroller 162 may then use the obtained temperature readings to regulate and independently control power flow to each of the filaments 32, 34 according to a set of pre-programmed instructions contained within the microcontroller 162. For example, should one or more of the filaments 32, 34 exceed a certain predetermined temperature threshold, the microcontroller 162 may automatically discontinue power flow to the filaments 32, 34, allowing them time to sufficiently cool to an acceptable predetermined temperature range. Once cooled, the resistance within the thermistors 208 once again signals the microcontroller 162 that the filaments 32, 34 are now within the desired temperatures range and power flow to the tray 10(A), 10(B) is resumed. In a related alternative embodiment, the thermistor 208 may be coupled to the substrate 36 directly as seen in Fig. 26. Coupling the thermistor 208 between the filaments 32, 34 allows for the temperature of that location on the substrate 36 to be measured and monitored for excessive heat. For example, with the bowl filament 34 reaching a temperature of approximately 150°C and the plate filament 32 reaching approximately 120°C, the temperature at the location of the thermistor 208 may obtain a normal temperature of around 65°C. Using this known value, should the substrate 36 suddenly rise to a temperature of 80°C or higher, for example, the microcontroller 162 may automatically discontinue power flow to the filaments 32, 34, allowing them and the substrate 36 to cool to more acceptable temperatures.

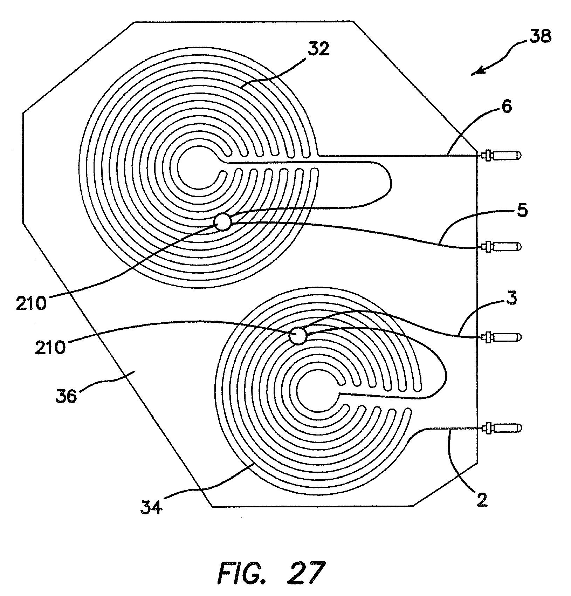

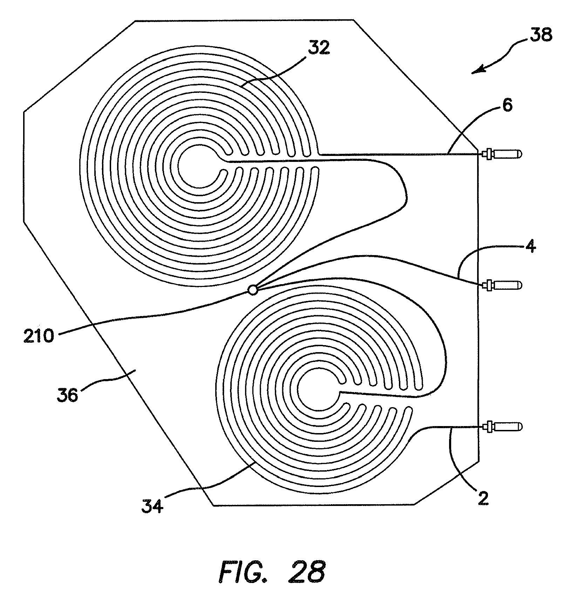

Alternatively, a thermostat 210 as is known in the art may be coupled to one or both filaments 32, 34 as seen in Fig. 27. This however is not part of the present invention. Briefly for the purposes of descriptive ease, the thermostat 210 may be any switch that comprises means for stopping and permitting power flow through an apparatus depending upon a fixed temperature value as measured by the thermostat 210. Each thermostat 210 seen in Fig. 27 is coupled to a filament output 5 and 3 of the plate filament 32 and bowl filament 34 respectively. If one or both of the filaments 32, 34 gets too hot as determined by each respective thermostat 210, the thermostat 210 cuts off power from being delivered from the cart 100 to the overheated filament 32, 34. After the filaments 32, 34 have sufficiently cooled, the thermostat 210 may then resume power flow to the filaments 32, 34. In a related alternative embodiment, the thermostat 210 may be coupled to the substrate 36 directly as seen in Fig. 28. Coupling the thermostat 210 between the filaments 32, 34 allows for the temperature of that location on the substrate 36 to be measured and monitored for excessive heat. For example, with the bowl filament 34 reaching a temperature of approximately 150°C and the plate filament 32 reaching approximately 120°C, the temperature at the location of the thermostat 210 may obtain a normal temperature of around 65°C. Using this known value, should the substrate 36 suddenly rise to a temperature of 80°C or higher, for example, the thermostat 210 may automatically discontinue power flow to the filaments 32, 34, allowing them and the substrate 36 to cool to more acceptable temperatures.

Once the tray 10 has been coupled to the cart 100 for the predetermined amount of time as determined by the microcontroller 162, the hot half or portion 52, 194 of the tray 10 is now fully resistively heated from the heating element 38 contained within it. The user may then remove the tray 10 from the cart 100 by sliding the tray 10 towards themselves in the proximal direction across the shelf 112 that it is disposed upon.

For the embodiment of the tray 10(A) comprising the contacts 62, as the tray 10(A) is slid out of the cart 100, the contacts 62 disengage from the rollers 78. As the rollers 78 disengage, the circuit formed between the cart 100 and tray 10(A) is broken, triggering the power supply 158 to shut off the increased current being delivered to the contact wheels 66. With contact wheels 66 disengaged, the rollers 78 are once again free to rotate about the axle 184 and assist the ease in which the tray 10(A) is removed from the cart 100. A new, unheated tray 10(A) may then inserted into the cart 100, thus beginning the process over.

Alternatively, after either tray 10(A) or 10(B) had been sufficiently heated as described above, comestible items disposed within a bowl or on a plate may placed anywhere within the hot half 52, 194 of the top surface 21 of the tray 10 and be reheated. However, it is to be expressly understood that the comestible item need not be cooked or initially heated at all or may be provided on the tray in an already heated condition. Thus, the system of the illustrated embodments may heat the comestible item to a delivery temperature for the first time or may maintain the temperature of the comestible item at a preferred temperature until delivered. The plate and bowl filaments 32, 34 may reach temperatures of up to 120°C and 150°C respectively, allowing comestible items which are cooked, but chilled to a temperature of approximately 5°C, to become rethermalized or re-heated to a temperature of approximately 76°C while they are disposed upon the hot half 52, 194 of the tray 10 within the dual climate cart 100. The specific temperatures in which the plate filament 32 and bowl filament 34 are heated as disclosed above are for illustrative purposes only. Temperatures other than what is listed may be possible and are well within the knowledge of one skilled in the relevant art.

As discussed above, the plurality of tray dividers 114 and thermal shields 118 divide the plurality of trays 10 into a hot half 52, 194 and a cold half 54, 194. Because the tray dividers 114 and thermal shields 118 are substantially disposed in the middle of the cart 100, the tray dividers 114 and thermal shields 118 also effectively divide the entire dual climate cart 100 into two separate and distinct portions, namely a "hot" cabinet 80, 200 and a "cold" cabinet 82, 202.

The hot cabinet 80, 200 comprises the plurality of sockets 122 or contact flanges 64 respectively which heat the trays 10 as discussed above. Heating of the trays 10 also causes the ambient air within the hot cabinet 80, 200 to heat. When the corresponding door 110 to the hot cabinet 80, 200 is shut as seen in Fig 5, the hot half 52, 194 of the plurality of trays 10(A), 10(B) are enclosed on all sides, providing additional insulation to the dual climate cart 100 and increasing the efficiency of the heating element 38 within the tray 10(A), 10(B).

The cold cabinet 82, 202 of the dual climate cart 100 may be configured and operated as a conventional refrigerator. Specifically, the cold cabinet 82, 202 includes a compressor, refrigerant, a plurality of heat-exchange coils, and an expansion valve (not seen) within the back portion 106 of the dual climate cart 100 which keeps the cold cabinet 82, 202 at a temperature typical to most conventional refrigerators, e.g. approximately 0°C. After a tray 10(A), 10(B) has been placed within the dual climate cart 100 as described above, any comestible items placed directly or indirectly on the cold half 54, 196 of the tray 10(A), 10(B) will be maintained at the temperature of the cold cabinet 82, 202 until removed. When the corresponding door 110 to the cold cabinet 82, 202 is shut as seen in Fig 5, the cold half 54, 196 of the plurality of trays 10(A), 10(B) are enclosed on all sides, providing additional insulation to the dual climate cart 100 and increasing the efficiency of the cold cabinet 82, 202 itself. Alternatively, the cold cabinet 82, 202 may include a fan or air circulation system as is known in the art for keeping the cold half 54, 196 of the trays 10(A) and 10(B) and any comestible items disposed on the trays 10 substantially at room temperature.

When a plurality of trays 10(A), 10(B) are disposed within the dual climate cart 100, the thermal shield 118 prevents air contained within the hot cabinet 80, 200 from mixing with that of the cold cabinet 82, 202. By preventing this and other thermal interactions, the thermal shields 118 stop any interference to the temperature of the cold half 54, 196 and the hot half 52, 194 of the trays 10, respectively.

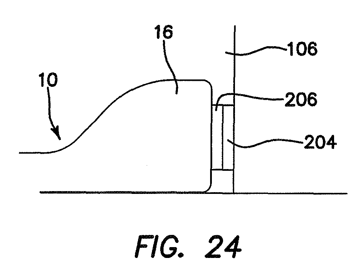

In another embodiment, each of the trays 10(A), 10(B) may be temporarily secured within the cart 100 via a plurality of permanent magnets disposed within the cart 100 and on a portion of the tray 10(A), 10(B). For example, the back portion 106 of the cart 100 may comprise a plurality of cart magnets 204 coupled to its surface as seen in Fig. 23A. Likewise, the tray 10(A), 10(B) may comprise a plurality of tray magnets 206 along its longitudinal surface such that when the tray 10(A), 10(B) is inserted into the cart 100, the tray magnets 206 meet the cart magnets 204 and couple together as seen in the cross sectional view of Fig. 24. The magnets 204, 206 are strong enough to give the tray 10(A), 10(B) added structural support while it is disposed within the cart 100, however they are not so strong so as to prevent a user from disengaging them from each other when the tray 10(A), 10(B) is being slid out of the cart 100.

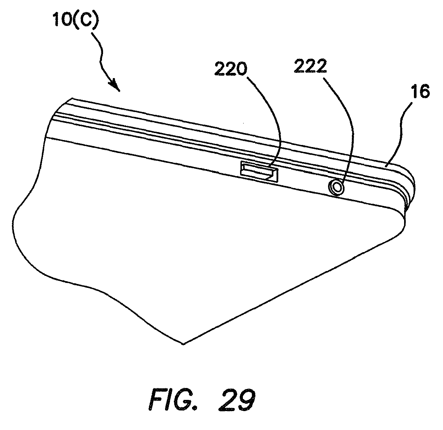

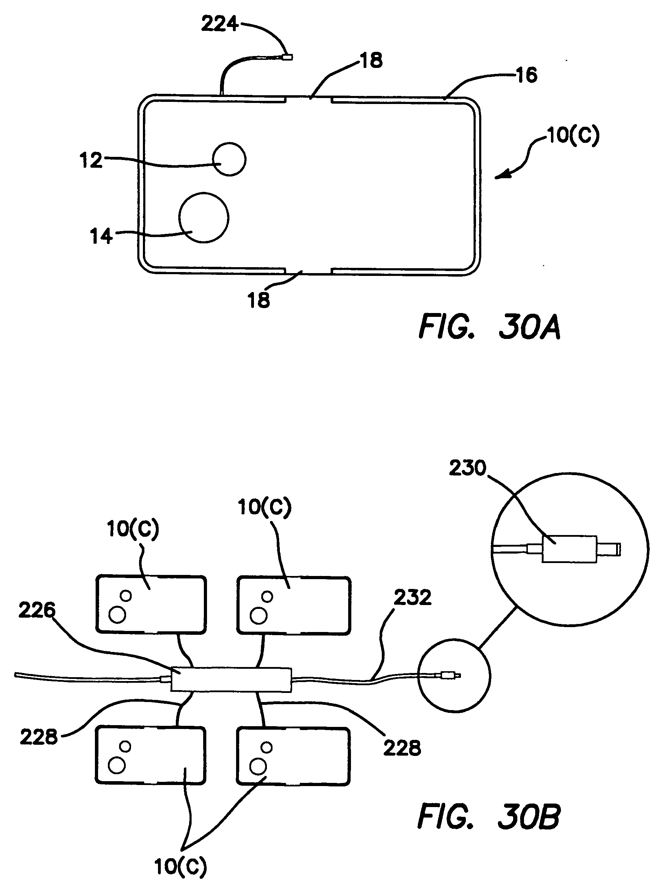

In yet another embodiment, the tray 10 may be coupled into an outside power source directly without the need of the cart 100 at all. For ease of descriptive purposes, the tray 10 in this embodiment is designated under reference numeral 10(C) in order to distinguish it from the previous embodiments of the tray 10, namely tray 10(A) and tray 10(B). Here the tray 10(C), seen in Figs. 29 and 30(A), may be coupled to a power source such as wall socket. As best seen in Fig. 29, the tray 10(C) comprises an AC/DC input 222 which may accommodate a charger 224 seen in Fig. 30A that comprises means for coupling into a standard wall socket as is known in the art. The tray 10(C) may also comprise a USB port 220 for coupling into a computer or other similar electronic device by means of a USB cable as is known in the art. Both the USB port 220 and AC/DC input 222 are coupled to the filaments 32, 34 disposed within the tray 10(C). As soon as the tray 10(C) is plugged in, power is immediately sent through both filaments 32, 34, raising their respective temperatures as discussed above and warming the small and large relief portions 12, 14 and any comestible items disposed thereon.

In a related embodiment, a plurality of trays 10(C) may be coupled to a single charging unit 226 as seen in Fig. 30B. The charging unit 226 may be coupled to a standard wall socket and then laid out on a flat surface such as a counter or table. A plurality of power cords 228 extend from the charging unit 226 which may be coupled to the AC/DC input 222 of a corresponding plurality of trays 10(C). The trays 10(C) may be laid out around the charging unit 226 as seen in Fig. 30B, however this configuration is for illustrative purposes only. The trays 10(C) may be stacked upon one another or disposed side by side according to the desires of the user and the surrounding space in which the charging unit 226 is disposed in. Whenever the charging unit 226 is plugged into a wall socket or other suitable power source, powered is supplied to the coupled trays 10(C), heating their respective filaments 32, 34 as described above. The charging unit 226 also comprises an extension cable 232 with a charging unit plug 230 disposed on its distal end as seen in the enlarged inset of Fig. 30B. The extension cable 232 allows for a plurality of charging units 226 to be coupled or linked together in series, permitting the warming of a larger number of trays 10(C). Each charging unit plug 230 comprises means for coupling into an input (not shown) within the next charging unit 226 in series, allowing for an indefinite number of charging units 226 to be linked together.

Many alterations and modifications may be made by those having ordinary skill in the art without departing from the spirit and scope of the invention. Therefore, it must be understood that the illustrated embodiment has been set forth only for the purposes of example and that it should not be taken as limiting the invention as defined by the following invention and its various embodiments.

Therefore, it must be understood that the illustrated embodiment has been set forth only for the purposes of example and that it should not be taken as limiting the invention as defined by the following claims. For example, notwithstanding the fact that the elements of a claim are set forth below in a certain combination, it must be expressly understood that the invention includes other combinations of fewer, more or different elements, which are disclosed in above even when not initially claimed in such combinations. A teaching that two elements are combined in a claimed combination is further to be understood as also allowing for a claimed combination in which the two elements are not combined with each other, but may be used alone or combined in other combinations. The excision of any disclosed element of the invention is explicitly contemplated as within the scope of the invention.

The words used in this specification to describe the invention and its various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a subcombination or variation of a subcombination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptionally equivalent, what can be obviously substituted and also what essentially incorporates the essential idea of the invention.

The disclosure further comprises the following embodiments:
Embodiment 1 is a system which is not part of the claimed invention for heating or rethermalizing comestible items carried on a plurality of trays within two separate zones comprising:
   a mobile cart;
   means for supporting the plurality of trays when disposed within the cart;
   a plurality of tray dividers, each tray divider dividing the cart into two portions while allowing the plurality of trays to be disposed within the cart, wherein one portion being designated as a "hot" zone and the remaining portion being designated as a "cold" zone;
   means for heating the portion of the plurality of trays disposed within the hot zone; and
   a controller board within the mobile cart and electrically coupled to the means for heating the portion of the plurality of trays in the hot zone.
Embodiment 2 is the system of embodiment 1 further comprising means for cooling the portion of the plurality of trays disposed within the cold zone, and where the controller board is electrically coupled to the means for cooling the portion of the plurality of trays disposed within the cold zone.
Embodiment 3 is the system of embodiment 1 or 2 where the means for supporting the plurality of trays comprises a plurality of opposed flanges disposed within the cart for accommodating the plurality of trays and for providing a space above each of the trays, and wherein the plurality of tray dividers divide the space above each of the accommodated trays into a "hot" portion disposed within the hot zone and a "cold" portion disposed within the cold zone.
Embodiment 4 is the system of any one of embodiments 1 to 3 where the means for supporting the plurality of trays comprise a plurality of shelves for accommodating the plurality of trays, and for providing a space above each of the trays, and wherein the plurality of tray dividers divide the space above each of the accommodated trays into a "hot" portion disposed within the hot zone and a "cold" portion disposed within the cold zone.
Embodiment 5 is the system of any one of embodiments 1 to 4 where each of the plurality of tray dividers dividing the space above the trays comprise a thermal shield extending from the tray divider toward the corresponding tray, wherein the thermal shield comprises means for preventing thermal interaction between the hot zone and the cold zone.
Embodiment 6 is the system of any one of embodiments 1 to 5 where the means for heating the plurality of trays comprises a plurality contact wheels disposed within the plurality of flanges, each contact wheel comprising means for electrically coupling to a corresponding plurality of contacts disposed on or in the plurality of trays.
Embodiment 7 is the system of any one of embodiments 1 to 6 where the means for heating the plurality of trays comprises a plurality of plugs disposed within the hot zone, each plug comprising means for electrically coupling to a plurality of pins disposed within each of the plurality of trays.
Embodiment 8 is the system of any one of embodiments 1 to 7 where the mobile cart further comprises a plurality of tray status lights, wherein at least one tray status light is disposed on a tray divider adjacent to a corresponding tray supported within the mobile cart.
Embodiment 9 is the system of the embodiment 8 where the plurality of tray status lights are electrically coupled to the controller board and where the plurality of tray status lights comprise means for indicating whether or not the tray has been heated by the means for heating the plurality of trays disposed within the hot zone.
Embodiment 10 is the system of any one of embodiments 1 to 9 further comprising a switching element for stopping the heating of the plurality of trays disposed within the hot zone when the mobile cart is opened.
Embodiment 11 is a tray as defined in claim 1.
Embodiment 12 is the tray of embodiment 11 where the plurality of filaments thermally coupled to the surface comprises at least two heating filaments, wherein one of the at least two heating filaments comprises means for heating the one heating filament to a higher temperature than that of the other one of the at least two heating filaments.
Embodiment 13 is the tray of embodiment 11 or 12 where the plurality of filaments are disposed within one portion of the tray, and wherein each filament is disposed in a substantially symmetrical pattern.
Embodiment 14 is the tray of any one of embodiments 11 to 13 where the means for heating the plurality of filaments comprises a plurality of contacts coupled to the plurality of filaments and disposed on the lip.
Embodiment 15 is the tray of any one of embodiments 11 to 14 where a recess is defined within the lip and where the means for heating the plurality of filaments comprises a plurality of power pins coupled to the plurality of filaments and disposed within the recess defined within the lip.
Embodiment 17 is the tray of any one of embodiments 11 to 16 further comprising an AC/DC input and a USB port coupled to the plurality of filaments.
Embodiment 18 is an apparatus for heating or rethermalizing comestible items disposed on a plurality of trays comprising:
   means for removably coupling each of the plurality of trays to a power source; and
   a heating element disposed within each tray, the heating element being defined within a "hot" zone of the tray.
Embodiment 19 is the apparatus of embodiment 18 where the heating element comprises at least two heating filaments, wherein at least one of the filaments comprises means for obtaining a higher temperature than that of the other one of the at least two filaments.
Embodiment 20 is the apparatus of embodiment 19 further comprising at least one thermistor coupled to at least one filament.
Embodiment 21 is the apparatus of any one of embodiments 18 to 20 where the means for removably coupling each of the plurality of trays to a power source comprises a charging unit coupled to the heating element of each tray.
Embodiment 22 is the apparatus of any one of embodiments 18 to 21 where the means for removably coupling each of the plurality of trays to a power source comprises a plurality of contacts coupled to filaments, the contacts comprising means for forming an electrical contact with the charging unit.
Embodiment 23 is a method as defined in claim 12 for heating or rethermalizing a comestible item carried on a tray comprising:
   inserting at least one tray into a mobile cart;
   coupling the at least one tray to a power source through the mobile cart;
   supplying electrical power to a heating element in the at least one tray from the power source;
   heating only a selected portion of the at least one tray in thermal communication with the comestible item;
   selectively discontinuing the flow of electric current to the at least one tray; and
   removing the at least one tray from the mobile cart.
Embodiment 24 is the method of embodiment 23 where inserting the tray into the mobile cart comprises:
   sliding the tray into the mobile cart;
   inserting a tray divider and a thermal shield disposed within the mobile cart over the tray to divide the tray into two portions with the tray divider and thermal shield,
   wherein the tray divider and thermal shield separate the tray into a hot portion including the heating element and a cold portion not including the heating element.
Embodiment 25 is the method of embodiment 23 or 24 where coupling the at least one tray to a power source through the mobile cart comprises:
   sliding the tray into the cart over a contact tray flange disposed within the cart;
   aligning a plurality of contacts disposed on the tray with a corresponding plurality of contact wheels disposed within the contact tray flange and coupled to the power source; and
   contacting the plurality of contacts to the plurality of contact wheels.
Embodiment 26 is the method of any one of embodiments 23 to 25 where heating the at least one tray comprises:
   coupling electrical power from the power source to a plurality of filaments disposed within the at least one tray;
   resistively heating the plurality of filaments by means of the electric power, wherein at least one of the plurality of filaments is raised to a higher temperature than that of the other ones of the plurality of filaments within the tray; and
   transferring heat generated by the plurality of filaments to a top surface of the at least one tray.
Embodiment 27 is the method of any one of embodiments 23 to 26 further comprising preventing the portion of the tray that is heated from thermally interacting with at least one unheated portion of the tray.
Embodiment 28 is the method of any one of embodiments 23 to 27 further comprising monitoring the temperature of the heating element with a thermistor or thermostat coupled to at least one of the plurality of filaments.
Embodiment 29 is the method of any one of embodiments 23 to 28 where coupling the at least one tray to a power source through the mobile cart comprises:
   inserting a plurality of power pins disposed on the at least one tray into a corresponding plurality of power plugs defined within at least one socket disposed within the mobile cart;
   inserting a pair of loop pins adjacently disposed on the at least one tray next to the power pins into a corresponding pair of loop plugs defined within the at least one socket; and
   inserting a pair of guide pins disposed on the at least one tray into a corresponding pair of guide plugs defined within the at least one socket.
Embodiment 30 is the method of embodiment 29 further comprising electrically coupling the power pins to the power plugs before electrically coupling the loop pins to the loop plugs.
Embodiment 31 is the method of any one of embodiments 23 to 30 further comprising cycling the electrical power supplied to the at least one tray on and off for predetermined amounts of time as determined by a controller board disposed within the mobile cart.
Embodiment 32 is the method of any one of embodiments 23 to 31 further comprising powering down the mobile cart after a predetermined amount of time of inactivity has elapsed as determined by a controller board disposed within the mobile cart.

## Claims

1. A tray (10(A); 10(B); 10(C)) to be used in a dual climate system for heating or rethermalizing comestible items comprising:
a heatable surface (21);
a plurality of heating filaments (32, 34) thermally coupled to the flat surface (21); and
means (62; 40) for selectively providing power to the plurality of filaments (32, 34)
**characterized in** further comprising
a lip (16) disposed about the surface (21); and
a thermistor (208) coupled to at least one of the plurality of filaments (32, 34).

2. The tray of claim 1 further comprising a gap (18) defined within the lip (16).

3. The tray of claim 1 or 2 where the plurality of filaments (32, 34) thermally coupled to the surface (21) comprises at least two heating filaments (32, 34), wherein one of the at least two heating filaments (32, 34) comprises means for heating the one heating filament to a higher temperature than that of the other one of the at least two heating filaments (32, 34).

4. The tray of any one of claims 1 to 3 where the plurality of filaments (32, 34) are disposed within one portion of the tray (10(A); 10(B); 10(C)), and wherein each filament (32, 34) is disposed in a substantially symmetrical pattern.

5. The tray of any one of claims 1 to 4 where the means (62; 40) for heating the plurality of filaments comprises a (32, 34) plurality of contacts (62) coupled to the plurality of filaments (32, 34) and disposed on the lip (16).

6. The tray of any one of claims 1 to 5 where a recess (24) is defined within the lip (16) and where the means (62; 40) for heating the plurality of filaments (32, 34) comprises a plurality of power pins (40) coupled to the plurality of filaments (32, 34) and disposed within the recess (24) defined within the lip (16).

7. The tray of any one of claims 1 to 6 further comprising an AC/DC input (222) and a USB port (220) coupled to the plurality of filaments (32, 34).

8. An apparatus (100) for heating or rethermalizing comestible items disposed on a plurality of trays (10(A); 10(B); 10(C)), comprising:
a plurality of trays (10(A); 10(B); 10(C)) according to any one of the preceding claims;
means (66; 122, 130) for removably coupling each of the plurality of trays (10(A); 10(B); 10(C)) to a power source;
a heating element (38) disposed within each tray (10(A); 10(B); 10(C)), the heating element (38) being defined within a "hot" zone of the tray (10(A); 10(B); 10(C)); and
at least one thermistor (208) coupled to at least one filament.

9. The apparatus (100) of claim 8 where the heating element (38) comprises at least two heating filaments (32, 34), wherein at least one of the filaments (32, 34) comprises means for obtaining a higher temperature than that of the other one of the at least two filaments (32, 34).

10. The apparatus (100) of claim 8 or 9 where the means (66; 122, 130) for removably coupling each of the plurality of trays (10(A); 10(B); 10(C)) to a power source comprises a charging unit (226) coupled to the heating element (38) of each tray (10(A); 10(B); 10(C)).

11. The apparatus (100) of claim 10 where the means for removably coupling each of the plurality of trays (10(A); 10(B); 10(C)) to a power source comprises a plurality of contacts (66) coupled to filaments (32, 34), the contacts (66) comprising means for forming an electrical contact with the charging unit.

12. A method for heating or rethermalizing a comestible item carried on a tray (10(A); 10(B); 10(C)) according to any one of claims 1 to 8, comprising:
inserting at least one tray (10(A); 10(B); 10(C)) into a mobile cart (100);
coupling the at least one tray (10(A); 10(B); 10(C)) to a power source through the mobile cart (100);
supplying electrical power to a heating element (38) in the at least one tray (10(A); 10(B); 10(C)) from the power source;
heating only a selected portion of the at least one tray (10(A); 10(B); 10(C)) in thermal communication with the comestible item;
selectively discontinuing the flow of electric current to the at least one tray (10(A); 10(B); 10(C));
removing the at least one tray (10(A); 10(B); 10(C)) from the mobile cart (100); and
monitoring the temperature of the heating element with a thermistor (208) coupled to at least one of the plurality of filaments (32, 34).

13. The method of claim 12 where inserting the tray (10(A); 10(B); 10(C)) into the mobile cart (100) comprises:
sliding the tray (10(A); 10(B); 10(C)) into the mobile cart (100);
inserting a tray divider (114) and a thermal shield (118) disposed within the mobile cart (100) over the tray (10(A); 10(B); 10(C)) to divide the tray (10(A); 10(B); 10(C)) into two portions with the tray divider (114) and thermal shield (118),
wherein the tray divider (114) and thermal shield (118) separate the tray (10(A); 10(B); 10(C)) into a hot portion including the heating element (38) and a cold portion not including the heating element (38).

14. The method of claim 12 or 13 where coupling the at least one tray (10(A); 10(B); 10(C)) to a power source through the mobile cart (100) comprises:
sliding the tray (10(A); 10(B); 10(C)) into the cart (100) over a contact tray flange (68) disposed within the cart (100);
aligning a plurality of contacts disposed on the tray (10(A); 10(B); 10(C)) with a corresponding plurality of contact wheels (66) disposed within the contact tray flange (68) and coupled to the power source; and
contacting the plurality of contacts(62) to the plurality of contact wheels (66).

15. The method of any one of claims 12 to 14 where heating the at least one tray (10(A); 10(B); 10(C)) comprises:
coupling electrical power from the power source to a plurality of filaments (32, 34) disposed within the at least one tray (10(A); 10(B); 10(C));
resistively heating the plurality of filaments (32, 34) by means of the electric power, wherein at least one of the plurality of filaments (32, 34) is raised to a higher temperature than that of the other ones of the plurality of filaments (32, 34) within the tray (10(A); 10(B); 10(C)); and
transferring heat generated by the plurality of filaments (32, 34) to a top surface (21) of the at least one tray (10(A); 10(B); 10(C)).

16. The method of any one of claims 12 to 15 further comprising preventing the portion of the tray (10(A); 10(B); 10(C)) that is heated from thermally interacting with at least one unheated portion of the tray.

17. The method of any one of claims 12 to 16 where coupling the at least one tray (10(A); 10(B); 10(C)) to a power source through the mobile cart (100) comprises:
inserting a plurality of power pins (40) disposed on the at least one tray (10(A); 10(B); 10(C)) into a corresponding plurality of power plugs (130(3)) defined within at least one socket (122) disposed within the mobile cart (100);
inserting a pair of loop pins (31) adjacently disposed on the at least one tray (10(A); 10(B); 10(C)) next to the power pins (40) into a corresponding pair of loop plugs (130(2)) defined within the at least one socket (122); and
inserting a pair of guide pins (27, 28) disposed on the at least one tray (10(A); 10(B); 10(C)) into a corresponding pair of guide plugs (130(1), 130(4)) defined within the at least one socket (122).

18. The method of claim 17 further comprising electrically coupling the power pins (40) to the power plugs (130(3)) before electrically coupling the loop pins (31) to the loop plugs (130(2)).

19. The method of any one of claims 12 to 18 further comprising cycling the electrical power supplied to the at least one tray (10(A); 10(B); 10(C)) on and off for predetermined amounts of time as determined by a controller board (150) disposed within the mobile cart (100).

20. The method of any one of claims 12 to 19 further comprising powering down the mobile cart (100) after a predetermined amount of time of inactivity has elapsed as determined by a controller board (150) disposed within the mobile cart (100).

## Patentansprüche

1. Tablett (10(A); 10(B); 10(C)), das in einem Doppel-Klimasystem zum Erhitzen oder Wiedererwärmen von essbaren Artikeln verwendet wird, aufweisend:
eine heizbare Oberfläche (21);
mehrere Heizfäden (32, 34), die thermisch mit der flachen Oberfläche (21) gekoppelt sind; und
ein Mittel (62; 40) zum selektiven Bereitstellen von Strom an die mehreren Fäden (32, 34),
**dadurch gekennzeichnet, dass** es ferner
eine Lippe (16), die um die Oberfläche (21) angeordnet ist; und
einen Thermistor (208), der mit mindestens einem von den mehreren Fäden (32, 34) gekoppelt ist, aufweist.

2. Tablett nach Anspruch 1, ferner aufweisend eine Lücke (18), die innerhalb der Lippe (16) definiert ist.

3. Tablett nach Anspruch 1 oder 2, wobei die mehreren Fäden (32, 34), die thermisch mit der Oberfläche (21) gekoppelt sind, mindestens zwei Heizfäden (32, 34) aufweisen, wobei einer der mindestens zwei Heizfäden (32, 34) ein Mittel aufweist, um den einen Heizfaden auf eine höhere Temperatur zu erhitzen, als die des anderen der mindestens zwei Heizfäden (32, 34).

4. Tablett nach einem der Ansprüche 1 bis 3, wobei die mehreren Fäden (32, 34) innerhalb eines Abschnitts des Tabletts (10(A); 10 (B); 10 (C)) angeordnet sind, und wobei jeder Faden (32, 34) in einem im Wesentlichen symmetrischen Muster angeordnet ist.

5. Tablett nach einem der Ansprüche 1 bis 4, wobei das Mittel (62; 40) zum Erhitzen der mehreren Fäden (32, 34) mehrere Kontakte (62) aufweist, die mit den mehreren Fäden (32, 34) gekoppelt und an der Lippe (16) angeordnet sind.

6. Tablett nach einem der Ansprüche 1 bis 5, wobei eine Aussparung (24) innerhalb der Lippe (16) definiert ist und das Mittel (62; 40) zum Erhitzen der mehreren Fäden (32, 34) mehrere Stromstifte (40) aufweist, die mit den mehreren Fäden (32, 34) gekoppelt und innerhalb der innerhalb der Lippe (16) definierten Aussparung (24) angeordnet sind.

7. Tablett nach einem der Ansprüche 1 bis 6, ferner aufweisend einen AC/DC-Eingang (222) und einen USB-Anschluss (220), der mit den mehreren Fäden (32, 34) gekoppelt ist.

8. Vorrichtung (100) zum Erhitzen oder Wiedererwärmen von essbaren Artikeln, die auf mehreren Tabletts (10(A); 10(B); 10(C)) angeordnet sind, aufweisend:
mehrere Tabletts (10(A); 10(B); 10(C)) nach einem der vorstehenden Ansprüche;
ein Mittel (66; 122, 130), um jedes der mehreren Tabletts (10 (A) ; 10(B); 10 (C)) entfernbar mit einer Stromquelle zu koppeln;
ein Heizelement (38), das innerhalb von jedem Tablett (10 (A) ; 10(B); 10 (C)) angeordnet ist, wobei das Heizelement (38), innerhalb einer "heißen" Zone des Tabletts (10(A); 10(B); 10 (C)) definiert ist; und
mindestens einen Thermistor (208), der mit mindestens einem Faden gekoppelt ist.

9. Vorrichtung (100) nach Anspruch 8, wobei das Heizelement (38) mindestens zwei Heizfäden (32, 34) aufweist, wobei mindestens einer von den Fäden (32, 34) Mittel zum Erlangen einer höheren Temperatur als die des anderen der mindestens zwei Fäden (32, 34) aufweist.

10. Vorrichtung (100) nach Anspruch 8 oder 9, wobei das Mittel (66; 122, 130), um jedes der mehreren Tabletts (10 (A) ; 10(B); 10 (C)) entfernbar mit einer Stromquelle zu koppeln, eine Ladeeinheit (226) aufweist, die mit dem Heizelement (38) von jedem Tablett (10(A); 10(B); 10(C)) gekoppelt ist.

11. Vorrichtung (100) nach Anspruch 10, wobei das Mittel, um jedes der mehreren Tabletts (10(A); 10(B); 10(C)) entfernbar mit einer Stromquelle zu koppeln, mehrere Kontakte (66) aufweist, die mit Fäden (32, 34) gekoppelt sind, wobei die Kontakte (66) ein Mittel zum Bilden eines elektrischen Kontaktes mit der Ladeeinheit aufweisen.

12. Verfahren zum Erhitzen oder Wiedererwärmen eines essbaren Artikels, der auf einem Tablett (10(A); 10(B); 10(C)) nach einem der Ansprüche 1 bis 8 transportiert wird, aufweisend:
Einsetzen von mindestens einem Tablett (10(A); 10(B); 10(C)) in einen mobilen Wagen (100);
Koppeln des mindestens einen Tabletts (10(A); 10(B); 10(C)) mit einer Stromquelle durch den mobilen Wagen (100);
Zuführen elektrischen Stroms zu einem Heizelement (38) in dem mindestens einen Tablett (10(A); 10(B); 10(C)) von der Stromquelle;
Erhitzen von nur einem ausgewählten Abschnitt des mindestens einen Tabletts (10 (A) ; 10 (B) ; 10 (C)), der in thermischer Verbindung mit dem essbaren Artikel steht;
selektives Unterbrechen des elektrischen Stromflusses zu dem mindestens einen Tablett (10(A); 10(B); 10(C));
Entfernen des mindestens einen Tabletts (10(A); 10(B); 10(C)) von dem mobilen Wagen (100); und
Überwachen der Temperatur des Heizelements mit einem Thermistor (208), der mit mindestens einem von den mehreren Fäden (32, 34) gekoppelt ist.

13. Verfahren nach Anspruch 12, wobei das Einsetzen des Tabletts (10 (A) ; 10 (B); 10 (C)) in den mobilen Wagen (100) aufweist:
Schieben des Tabletts (10(A); 10 (B); 10 (C)) in den mobilen Wagen (100);
Einsetzen eines Tablettteilers (114) und einer Wärmeabschirmung (118), die innerhalb des mobilen Wagens (100) angeordnet ist, über dem Tablett (10(A); 10(B); 10 (C)), um das Tablett (10(A); 10(B); 10(C)) mit dem Tablettteiler (114) und der Wärmeabschirmung (118) in zwei Abschnitte zu teilen,
wobei der Tablettteiler (114) und die Wärmeabschirmung (118) das Tablett (10(A); 10(B); 10(C)) in einen heißen Abschnitt, der das Heizelement (38) aufweist, und einen kalten Abschnitt, der das Heizelement (38) nicht aufweist, trennen.

14. Verfahren nach Anspruch 12 oder 13, wobei das Koppeln des mindestens einen Tabletts (10(A); 10(B); 10(C)) mit einer Stromquelle durch den mobilen Wagen (100) aufweist:
Schieben des Tabletts (10(A); 10 (B); 10 (C)) in den Wagen (100) über einen Tablettkontaktflansch (68), der innerhalb des Wagens (100) angeordnet ist;
Ausrichten von mehreren Kontakten, die auf dem Tablett (10(A); 10(B); 10(C)) angeordnet sind, mit entsprechenden mehreren Kontaktscheiben (66), die innerhalb des Tablettkontaktflansches (68) angeordnet und mit der Stromquelle gekoppelt sind; und
Kontaktieren der mehreren Kontakte (62) mit den mehreren Kontaktscheiben (66).

15. Verfahren nach einem der Ansprüche 12 bis 14, wobei das Erhitzen des mindestens einen Tabletts (10(A); 10(B); 10 (C)) aufweist:
Koppeln von elektrischem Strom von der Stromquelle mit mehreren Fäden (32, 34), die innerhalb des mindestens einen Tabletts (10 (A) ; 10(B); 10 (C)) angeordnet sind;
Widerstandsheizen der mehreren Fäden (32, 34) mittels elektrischen Stroms, wobei mindestens einer von den mehreren Fäden (32, 34) auf eine höhere Temperatur angehoben wird als die des anderen von den mehreren Fäden (32, 34) innerhalb des Tabletts (10(A); 10(B); 10 (C) ) ; und
Übertragen der Wärme, die durch die mehreren Fäden (32, 34) erzeugt wird, auf eine obere Oberfläche (21) des mindestens einen Tabletts (10(A); 10(B); 10(C)).

16. Verfahren nach einem der Ansprüche 12 bis 15, ferner aufweisend ein Verhindern, dass der Abschnitt des Tabletts (10(A); 10 (B); 10(C)), der erhitzt wird, thermisch mit mindestens einem unbeheizten Abschnitt des Tabletts interagiert.

17. Verfahren nach einem der Ansprüche 12 bis 16, wobei das Koppeln des mindestens einen Tabletts (10(A); 10(B); 10(C)) mit einer Stromquelle durch den mobilen Wagen (100) aufweist:
Einsetzen von mehreren Stromstiften (40), die an dem mindestens einen Tablett (10(A); 10(B); 10 (C)) angeordnet sind, in entsprechende mehrere Strombuchsen (130(3)), die innerhalb mindestens einer Dose (122) definiert sind, die innerhalb des mobilen Wagens (100) angeordnet ist;
Einsetzen eines Paars von Regelkreisstiften (31), die angrenzend an dem mindestens einen Tablett (10 (A) ; 10(B); 10 (C)) neben den Stromstiften (40) angeordnet sind, in ein entsprechendes Paar von Regelkreisbuchsen (130(2)), die innerhalb der mindestens einen Dose (122) definiert sind; und Einsetzen eines Paars von Führungsstiften (27, 28), die an dem mindestens einen Tablett (10(A); 10(B); 10(C)) angeordnet sind, in ein entsprechendes Paar von Führungsbuchsen (130(1), 130(4)), die innerhalb der mindestens einen Dose (122) definiert sind.

18. Verfahren nach Anspruch 17, ferner aufweisend ein elektrisches Koppeln der Stromstifte (40) mit den Strombuchsen (130(3)) vor dem elektrischen Koppeln der Regelkreisstifte (31) mit den Regelkreisbuchsen (130(2)).

19. Verfahren nach einem der Ansprüche 12 bis 18, ferner aufweisend ein Ein- und Ausschalten des elektrischen Stroms, der zu dem mindestens einen Tablett (10(A); 10(B); 10(C)) zugeführt wird, für vorbestimmte Zeiträume, wie bestimmt durch eine Controllerkarte (150), die innerhalb des mobilen Wagens (100) angeordnet ist.

20. Verfahren nach einem der Ansprüche 12 bis 19, ferner aufweisend ein Abschalten des mobilen Wagens (100), nachdem ein vorbestimmter Zeitraum der Inaktivität vergangen ist, wie durch eine Steuerplatine (150) bestimmt, die innerhalb des mobilen Wagens (100) angeordnet ist.

## Revendications

1. Plateau (10(A) ; 10 (B) ; 10 (C)) à utiliser dans un système à double climat pour chauffer ou remettre en température des articles comestibles, comprenant :
une surface apte à être chauffée (21) ;
une pluralité de filaments chauffants (32, 34) thermiquement couplés à la surface plate (21) ; et
des moyens (62 ; 40) permettant l'alimentation sélective de la pluralité de filaments (32, 34) ;
**caractérisé en ce qu'**il comprend en outre
une lèvre (16) disposée autour de la surface (21) ; et
une thermistance (208) couplée à au moins l'un de la pluralité de filaments (32, 34).

2. Plateau selon la revendication 1, comprenant en outre un espace (18) défini à l'intérieur de la lèvre (16).

3. Plateau selon la revendication 1 ou 2, dans lequel la pluralité de filaments (32, 34) thermiquement couplés à la surface (21) comprennent au moins deux filaments chauffants (32, 34), l'un des au moins deux filaments chauffants (32, 34) comprenant des moyens permettant de chauffer ce filament chauffant à une température plus élevée que celle de l'autre des au moins deux filaments chauffants (32, 34).

4. Plateau selon l'une quelconque des revendications 1 à 3, dans lequel la pluralité de filaments (32, 34) sont disposés dans une partie du plateau (10 (A) ; 10 (B) ; 10 (C)), et chaque filament (32, 34) est disposé selon un motif essentiellement symétrique.

5. Plateau selon l'une quelconque des revendications 1 à 4, dans lequel les moyens (62, 40) pour chauffer la pluralité de filaments (32, 34) comprend une pluralité de contacts (62) couplés à la pluralité de filaments (32, 34) et disposés à la lèvre (16).

6. Plateau selon l'une quelconque des revendications 1 à 5, dans lequel un évidemment (24) est défini dans la lèvre (16) et les moyens (62, 40) pour le chauffage de la pluralité de filaments (32, 34) comprennent une pluralité de broches d'alimentation (40) couplées à la pluralité de filaments (32, 34) et disposées dans l'évidement (24) défini dans la lèvre (16).

7. Plateau selon l'une quelconque des revendications 1 à 6, comprenant en outre une entrée CA/CC (222) et un port USB (220) couplés à la pluralité de filaments (32, 34).

8. Appareil (100) pour chauffer ou remettre en température des articles comestibles disposés sur une pluralité de plateaux (10(A) ; 10 (B) ; 10 (C)), comprenant :
une pluralité de plateaux (10(A) ; 10 (B) ; 10 (C)), selon l'une quelconque des revendications précédentes ;
des moyens (66 ; 122, 130) pour coupler de manière détachable chaque plateau de ladite une pluralité de plateaux (10 (A) ; 10 (B) ; 10 (C)) à une source d'alimentation ;
un élément chauffant (38) disposé dans chaque plateau (10 (A) ; 10 (B) ; 10 (C)), l'élément chauffant (38) étant défini dans une zone "chaude" du plateau (10(A) ; 10 (B) ; 10 (C) ) ; et
au moins une thermistance (208) couplée à au moins un filament.

9. Appareil (100) selon la revendication 8, dans lequel l'élément chauffant (38) comprend au moins deux filaments chauffants (32, 34), au moins l'un des filaments (32, 34) comprenant des moyens pour obtenir une température plus élevée que celle de l'autre des au moins deux filaments chauffants (32, 34).

10. Appareil (100) selon la revendication 8 ou 9, dans lequel les moyens (66 ; 122, 130) pour le couplage détachable de chaque plateau de la pluralité de plateaux (10 (A) ; 10 (B) ; 10 (C)) à une source d'alimentation comprend une unité de charge (226) couplée à l'élément chauffant (38) de chaque plateau (10(A) ; 10(B) ; 10(C)).

11. Appareil (100) selon la revendication 10, dans lequel les moyens pour le couplage détachable de chaque plateau de la pluralité de plateaux (10(A) ; 10(B) ; 10(C)) à une source d'alimentation comprend une pluralité de contacts (66) couplés à des filaments (32, 34), les contacts (66) comprenant des moyens pour former un contact électrique avec l'unité de charge.

12. Procédé de chauffage ou remise en température d'un article comestible transporté sur un plateau (10(A) ; 10(B) ; 10(C)) selon l'une quelconque des revendications 1 à 8, comprenant :
l'insertion d' au moins un plateau (10 (A) ; 10 (B) ; 10 (C)) dans un chariot mobile (100) ;
le couplage de l'au moins un plateau (10(A) ; 10(B) ; 10(C)) à une source d'alimentation par l'intermédiaire du chariot mobile (100) ;
la fourniture d'une alimentation électrique à un élément chauffant (38) situé dans l'au moins un plateau (10 (A) ; 10 (B) ; 10 (C)) à partir de la source d'alimentation ;
le chauffage d'uniquement une partie sélectionnée de l'au moins un plateau (10(A) ; 10 (B) ; 10(C)) en communication thermique avec l'article comestible ;
l'arrêt sélectif du flux de courant électrique vers l'au moins un plateau (10(A) ; 10(B) ; 10(C)) ;
le retrait de l'au moins un plateau (10(A) ; 10(B) ; 10(C)) hors du chariot mobile (100) ; et
la surveillance de la température de l'élément chauffant à l'aide d'une thermistance (208) couplée à au moins l'un de la pluralité de filaments (32, 34).

13. Procédé selon la revendication 12, dans lequel l'insertion du plateau (10(A) ; 10(B) ; 10(C)) dans le chariot mobile (100) comprend :
le coulissement du plateau (10 (A) ; 10 (B) ; 10 (C)) dans le chariot mobile (100) ;
l'insertion d'un diviseur de plateau (114) et d'un écran thermique (118) disposés dans le chariot mobile (100) sur le plateau (10 (A) ; 10 (B) ; 10(C)) pour diviser le plateau (10(A) ; 10 (B) ; 10(C)) en deux parties à l'aide du diviseur de plateau (114) et de l'écran thermique (118),
le diviseur de plateau (114) et l'écran thermique (118) séparant le plateau (10(A) ; 10(B) ; 10(C)) en une partie chaude incluant l'élément chauffant (38) et une partie froide n'incluant pas l'élément chauffant (38).

14. Procédé selon la revendication 12 ou 13, dans lequel le couplage de l'au moins un plateau (10(A) ; 10(B) ; 10(C)) à une source d'alimentation par l'intermédiaire du chariot mobile (100) comprend :
le coulissement du plateau (10 (A) ; 10 (B) ; 10 (C)) dans le chariot (100) sur une ailette de contact plateau (68) disposée dans le chariot (100) ;
l'alignement d'une pluralité de contacts disposés sur le plateau (10 (A) ; 10 (B) ; 10 (C)) avec une pluralité correspondante de routes de contact (66) disposées dans l'ailette de contact plateau (68) et couplées à la source d'alimentation ; et
la mise en contact de la pluralité de contacts (62) avec la pluralité de roues de contact (66).

15. Procédé selon l'une quelconque des revendications 12 à 14, dans lequel le chauffage de l'au moins un plateau (10(A) ; 10 (B) ; 10 (C)) comprend :
le couplage de l'alimentation électrique de la source d'alimentation à une pluralité de filaments (32, 34) disposés dans l'au moins un plateau (10(A) ; 10 (B) ; 10 (C)) ;
le chauffage résistif de la pluralité de filaments (32, 34) au moyen de l'alimentation électrique, dans lequel au moins l'un de la pluralité de filaments (32, 34) est élevé à une température plus élevée que celle des autres filaments de la pluralité de filaments (32, 34) dans le plateau (10(A) ; 10 (B) ; 10 (C)) ; et
le transfert de chaleur générée par la pluralité de filaments (32, 34) à une surface supérieure (21) de l'au moins un plateau (10 (A) ; 10 (B) ; 10 (C)).

16. Procédé selon l'une quelconque des revendications 12 à 15, comprenant en outre le fait d'empêcher la partie du plateau (10 (A) ; 10(B) ; 10 (C)) qui est chauffée d'entrer en interaction thermique avec au moins une partie non chauffée du plateau.

17. Procédé selon l'une quelconque des revendications 12 à 16, dans lequel le couplage de l'au moins un plateau (10(A) ; ; 10 (B) ; 10(C)) à une source d'alimentation par l'intermédiaire du chariot mobile (100) comprend :
l'insertion d'une pluralité de broches d'alimentation (40) disposées sur l'au moins un plateau (10 (A) ; 10 (B) ; 10 (C)) dans une pluralité correspondante de fiches d'alimentation (130(3)) définies dans au moins une prise (122) disposée dans le chariot mobile (100) ;
l'insertion d'une paire de broches de bouclage (31) disposées en contiguïté sur l'au moins un plateau (10 (A) ; 10 (B) ; 10 (C)) à côté des broches d'alimentation (40) dans une paire correspondante de fiches de bouclage (130(2)) définies dans l'au moins une prise (122) ; et
l'insertion d'une paire de broches de guidage (27, 28) disposées sur l'au moins un plateau (10 (A) ; 10(B) ; 10(C)) dans une paire correspondante de fiches de guidage (130(1), 130(4)) définies dans l'au moins une prise (122).

18. Procédé selon la revendication 17, comprenant en outre le couplage électrique des broches d'alimentation (40) aux fiches d'alimentation (130(3)) avant le couplage électrique des broches de bouclage (31) aux fiches de bouclage (130(2)).

19. Procédé selon l'une quelconque des revendications 12 à 18, comprenant en outre le cyclage de l'alimentation électrique fournie à l'au moins un plateau (10 (A) ; 10 (B) ; 10 (C)) en allumage et extinction pendant des périodes de temps prédéterminées, telles que déterminées par une carte contrôleur (150) disposée dans le chariot mobile (100).

20. Procédé selon l'une quelconque des revendications 12 à 19, comprenant en outre l'arrêt de l'alimentation du chariot mobile (100) après écoulement d'une période de temps d'inactivité prédéterminée, telle que déterminée par une carte contrôleur (150) disposée dans le chariot mobile (100).
